# EUROPEAN PATENT SPECIFICATION

(11) **EP 1 637 861 B1**
(45) Date of publication and mention of the grant of the patent: **17.11.2010**
(21) Application number: 04255659.7
(22) Date of filing: 17.09.2004
(51) Int. Cl.: G01M 3/20, G01M 3/00

(54) **Reference gas leak**
Referenz-Gasleck
Fuite de référence à gaz

(43) Date of publication of application: 22.03.2006
(73) Proprietor: Collins, Ronald Douglas, Battle, East Sussex TN33 0RB (GB)
(72) Inventor: Collins, Ronald Douglas, Battle, East Sussex TN33 0RB (GB)
(74) Representative: Mabey, Katherine Frances

(56) References cited:
- FR-A- 2 608 761
- GB-A- 2 401 190
- US-A- 2 856 148

## Description

The present invention relates to a reference gas leak and a method of manufacturing a reference gas leak. The present invention is particularly, although not exclusively, applicable to reference gas leaks for use in calibrating gas leak detectors.

It is often necessary to test products for gas leaks, both during manufacture, to ensure that the product meets a required standard, and when in use, to check whether the product is still functioning efficiently. For example, in the vacuum industry, pipes, valves and other components of vacuum systems are tested for gas leaks during, and after manufacture. In the automotive industry, parts of vehicles intended to hold fluids in use, such as radiators, braking systems, etc are tested for fluid tightness by testing for gas leaks during manufacture. Other fields in which it is common to carry out gas leak testing of components and products include domestic radiator and fluid system manufacture, the fire control industry, the food industry, the pharmaceutical industry, the petrochemical industry, the electronics industry, semi-conductor manufacture, pneumatic system manufacture, and the air conditioning, freezer and refrigeration industries.

Increasingly, it is also necessary to check products on a regular basis for gas leaks to establish whether they conform with environmental regulations relating to gas emissions. This is particularly common in relation to refrigeration and air conditioning systems. For example, refrigerant and freezer systems installed e.g. in supermarkets, must be regularly tested for gaseous emissions to ensure that environmental regulations are met.

Traditionally, testing of components for gas leaks has been carried out by pressurizing the component with a test gas, then immersing the component in a tank of liquid, and determining visually whether any bubbles of gas escaped from the component to leak into the liquid (the so-called "bubble test"). Another commonly used test involved subjecting the external surfaces of a component to be tested with a pressurized test dye, and then using a detector, such as an infra-red lamp, to determine whether any of the dye penetrated into the interior of the component, thus indicating a leak.

Recently, more sophisticated gas leak detectors have become available, allowing a quantitative assessment of leak rates. Such gas leak detectors include electronic gas leak detectors, for example operating on the basis of a change in the thermal conductivity of an element in an electronic circuit, mass spectrometers, ultra sonic detectors and detectors operating on the basis of electro-chemical, or ionization mechanisms.

Testing of a component for a gas leak using a gas leak detector is typically carried out by creating a pressure difference across the surface of the component, and measuring the leak rate of a test gas from the interior of the component to its exterior, or vice-versa. The gas leak detectors may be fixed to a surface of a component to be tested, or may be hand held.

In a "vacuum" test, the component to be tested is evacuated, and the leak detector placed in the interior of the component. A test gas is sprayed under pressure onto the external surfaces of the component, and the leak detector used to determine whether any of the gas passes into the interior of the component, indicating a leak.

In an alternative "over pressure" test, the leak detector is located externally of the component to be tested, and a test gas introduced to the interior of the component, to pressurize it above atmospheric pressure. In this case, a leak will be indicated if the pressurized gas passes from the interior to the exterior of the component, and is detected by the leak detector.

It is necessary to calibrate gas leak detectors both during manufacture, and periodically thereafter, to ensure that they continue to give reliable readings. This is because the response of a gas leak detector may change over time, and may also be sensitive to the environmental conditions e.g. temperature, pressure, under which the detector is used. It is particularly important to ensure that gas leak detectors used to determine whether components meet regulations governing emission rates are operating reliably in order to be able to certify a component as meeting the regulations.

One way to calibrate a gas leak detector is by using a reference gas leak. A reference gas leak is a device, which, receives a given gas at a known pressure, and hence flow rate, and emits the gas at a different, lower known flow rate. The outlet of a reference gas leak may be connected to a gas leak detector, to check whether the leak rate indicated by the gas leak detector corresponds to the known flow rate at which a selected gas is output by the reference gas leak when supplied to it at a given pressure.

Although the main use of reference gas leaks lies in the field of calibrating gas leak detectors, reference gas leaks may also be used to provide a change in pressure in other applications. For example, reference gas leaks may be used as valves, to provide a measured increase or decrease in the pressure within a vessel, or as conductances, for example, to provide a suitable lower pressure input to a device which operates at a pressure e.g. below atmospheric pressure.

Various types of reference gas leak have been proposed, including capillary, membrane, permeation and quartz glass reference gas leaks. FR 2608761 discloses a reference gas leak comprising a coiled tube, filled with a powdered metal. In the arrangement of FR 2608761 lower leak rates are achieved by increasing the length of the tube filled with the powder, and thus the path length of the powder within the tube which must be traversed by a gas in order for it to pass from one end of the reference leak to the other.

These known reference gas leaks all suffer from certain disadvantages, particularly when used in an industrial environment. There remains a need for a reference gas leak which is robust, able to operate reliably even under the often harsh conditions encountered in an industrial context in use, and which may be constructed to provide a wide range of different gas leak rates for use in a range of applications.

In accordance with a first aspect of the present invention there is provided a method of manufacturing a reference gas leak: the method comprising the steps of providing an open ended tube, inserting a powder in the tube, and compacting the powder in the tube to provide the reference gas leak.

The reference gas leak of the present invention is thus in the form of an open ended tube. A "plug" of powder is compacted between the ends of the tube to provide the reference gas leak. In use, a gas entering the reference leak at one end of the tube will pass through the compacted powder in the tube, to leak from the other end of the tube at a given flow rate. The compacted powder thus acts as a barrier to the passage of gas, whereby a gas supplied to the tube at a given flow rate emerges from the reference gas leak at a different, lower flow rate after passing through the compacted powder.

The present invention also extends to a product obtained in accordance with the method of the present invention in any of its aspects or embodiments described below.

In accordance with a second aspect of the present invention, there is provided: a reference gas leak comprising a tube having an inlet, an outlet, and a compacted powder fixed within the tube between the inlet and the outlet, whereby a gas supplied to the tube through the inlet passes through the fixed, compacted powder to leak from the outlet at a given rate.

The applicant has found that a reference gas leak in accordance with the present invention, which includes a plug of compacted powder fixed between its ends, may be constructed to provide a wide range of selected leak rates, under both fluid and molecular flow conditions, by selecting the degree to which the powder is compacted within the tube appropriately. As the powder is compacted within the tube, it has been found that gas leaks may be constructed with low leak rates, even for lighter gases, by simply compacting the powder to a greater extent, and without needing to significantly lengthen the tube, or increase the amount of powder inserted in the tube. The present invention may therefore provide a reference gas leak which may provide low leak rates but which is still of a manageable size to allow it to be incorporated into a wide range of application, including e.g. hand held units.

The use of a compacted powder also allows the gas leak to respond quickly when a gas is supplied to it to provide a required leak rate, due to the relatively short path length of powder which the gas must traverse, even in reference gas leaks constructed to provide relatively low leak rates. For example, the reference gas leak may be constructed to respond to a gas supplied to it within a few seconds, making the device suitable for use in a broad range of applications, including e.g. leak testing of pipelines which may be of several hundred metres in length. As the gas leak need not contain a large amount of powder, the tendency of the gas leak to retain a gas supplied to it after use may be reduced, reducing the risk of the gas leak contributing to background contamination, and avoiding the need to wait for the gas to dissipate, or to remove a gas residue before the gas leak may be re-used.

The compaction to which the powder is subjected to produce the reference gas leaks of the present invention acts to "fix" the powder into position, preserving the level of compaction achieved during the compaction step of the process, and hence the leak rate obtained during subsequent use. The reference gas leak of the present invention is thus relatively robust, and may be used under the harsh conditions often encountered in industrial context, in which gas leak detection is often carried out. For example, gas leak detectors are often installed on production lines e.g. in automotive production plants, and must be calibrated *in situ.* Similarly, vacuum systems installed in industrial facilities may incorporate leak detectors, which must be calibrated *in situ.*

The use of compaction to provide the leak means that the relatively robust reference gas leaks obtained in accordance with the invention may be incorporated into a wide range of different housings, appropriate for particular applications, as discussed below, even using processes in which the leak is subjected to relatively extreme conditions of e.g. pressure and/or temperature, without significantly affecting the leak rate established during manufacture. For example, the reference gas leaks may be welded into a housing.

It has been found that reference gas leaks in accordance with the invention may operate effectively even under relatively high temperatures, and in conditions in which a high pressure differential exists between the ends of the reference gas leak. For example, it has been found that reference gas leaks in accordance with the invention may be constructed to provide a reliable leak rate under pressure differentials between the ends of the tube in use of up to 100 bar (for Helium applied under pressure to one end of the tube, and the other at vacuum pressure), and over a temperature range of from around -200°C to around 1500°C.

It is believed that this is because, when the powder is compacted in the tube, it is effectively "fixed", allowing the gas leak to continue to provide a reliable selected leak rate, even if significant forces are applied to the powder in use. The compaction of the powder also allows the reference gas leak to continue to provide a reliable selected gas leak rate over relatively long periods, without requiring recalibration.

It has been found that the principal factor affecting the rate of at which gas supplied to the reference gas leak flows from the device after passing through the compacted powder ("the leak rate") is the degree of compaction of the powder within the tube. Preferably the method thus comprises the step of compacting the powder in the tube such that a gas entering the tube at one end leaks from the other end of the tube at a selected rate after passing through the compacted powder.

The leak rate of a reference gas leak is usually expressed with respect to a specific gas, supplied to one end of the tube at a specified pressure.

Leak rates are generally expressed in units of millibar.litre/second, with respect to a given gas. The leak rate is thus defined in terms of the flow rate of a given gas per millibar pressure difference between the ends of the reference gas leak when the gas is initially supplied to the tube. For example, a gas may be supplied under a given pressure e.g. 1 bar to one end of the tube, with the other initially at vacuum pressure, thus providing an initial pressure differential of 1 bar between the ends of the tube. It will be appreciated that a single reference gas leak in accordance with the invention may therefore provide a plurality of different selected gas leak rates, for different gases applied to and/or pressures of application of the gas to the leak.

The degree to which the powder is compacted in the tube should be chosen appropriately to try to provide a selected leak rate suitable for a reference leak rate to be used in its intended application. It will be appreciated that the reference gas leak may be used after compaction of the powder, or may be subjected to further processing, e.g. sintering after compaction of the powder as described in more detail below. Subsequent steps such as sintering may change the leak rate of the reference leak obtained after compaction of the powder. The selected leak rate obtained as a result of the compaction process may not, therefore, be the intended leak rate of the final reference leak. The effect of any subsequent processing to which the leak is to be subjected on the leak rate should therefore be taken into account when determining the degree to which the powder should be compacted to try to provide a selected leak rate after compaction which will result in the completed reference gas leak having an appropriate leak rate after further processing. The effect of processes, such as e.g. sintering on the leak rate of the reference gas leak after compaction of the powder may be determined e.g. empirically.

The leak rate of the reference gas leak will also be affected to a lesser extent by other factors, including, for example, the composition of the powder, the particle size of the powder, the vertical cross-sectional area of the interior of the tube, and hence the surface area of the "plug" of compacted powder within it upon which a gas is incident, the quantity of powder inserted in the tube, and the proportion of the tube occupied by the compacted powder, and which length of compacted powder must be traversed by a gas moving between the ends of the tube. The effect of these factors on the leak rate of the device may be determined empirically, and should also be taken into account when establishing the selected leak rate to be produced by compaction of the powder in the tube.

It has been found that reference gas leaks in accordance with the present invention may be constructed to provide final leak rates (after compaction and sintering of the powder) within a wide range of values, for example from in the order of 1 x 10⁻¹⁰ millibar.litre/second to 1000 millibar.litre/second (specified with respect to the gas Helium). The leaks may therefore be constructed to provide leak rates across the molecular and viscous flow regions. The transition between molecular and viscous behaviour of a gas generally occurs in the region of around 1 x 10⁻⁵ to 1 x 10⁻⁴ millibar.litre/second.

As the skilled person will understand, a reference gas leak giving a certain leak rate for a given gas e.g. Helium will give a lower leak rate for a heavier gas e.g. Argon under the same conditions. For example, for refrigerant gases, such as R134A, leak rates in the range of from 5 x 10⁻⁶ millibar. litre/second to 5 x 10⁻⁴ millibar.litre/second may be obtained. Leak rates for Argon in the range of from about 5 x 10⁻⁶ millibar.litre/second to about 10 millibar.litre/second may be obtained.

For example, reference gas leaks intended for use in calibrating Helium mass spectrometers should be capable of providing a leak rate in the range of from around 1 x 10⁻¹⁰ to about 1 x 10⁻⁷ millibar.litre/second, and preferably within the range of from 1 x 10⁻⁸ to 1 x 10⁻⁷ millibar.litre/second (specified with respect to Helium). Reference gas leaks for calibrating less sensitive hand held "sniffer" type gas leak detectors for use in applications such as leak testing of e.g. air conditioning units, car parts and refrigeration units may have leak rates in the range of from about 1 x 10⁻⁵ to about 1 x 10⁻³ millibar.litre/second. Reference gas leaks for calibrating electronic gas leak detectors operating on the basis of thermal conductivity should be capable of providing a leak rate in the order of 5 x 10-⁶ millibar.litre/second (for Helium gas). Reference gas leaks for use in the manufacture and calibration of gas leak detectors used to detect leaks in the manufacture of e.g. automotive or domestic radiators, fluid systems etc and vacuum applications, should be capable of providing a gas leak in the order of around 1 x 10⁻⁵ millibar.litre/second specified with respect to Helium gas. Reference gas leaks for use in calibrating leak detectors for use with refrigerant gases may have leak rates within the range of from about 1 x 10⁻⁶ to about 1 x 10⁻⁵ millibar.litre/second (specified with respect to R134A gas). Larger leak rates of from around 1 x 10⁻² to about 500 millibar.litre/second may be used for applications such as checking flow rates (with respect to Helium).

The selected leak rate of the reference gas leak after compaction of the powder may be selected as appropriate within these wide ranges to try to obtain a reference gas leak which after sintering of the powder has a leak rate appropriate for a given application. For example, a reference gas leak intended for calibrating a gas leak detector should be able to provide a leak rate within the range of leak rates detectable by the detector for the gas, and pressure of application of the gas, with which the detector is to be used.

In preferred embodiments the reference gas leak has a leak rate expressed with respect to Helium in the range of from 1 x 10^{- 8}millibar.litre/second to 500 millibar.litre/second. From the above, it may be seen that many applications requiring reference gas leaks require leaks capable of providing reference leak rates within the range of from about 1 x 10⁻⁶ to about 1 x 10⁻⁴ millibar.litre/second (for Helium gas). Preferably the reference leak thus has a leak rate in the range of from 1 x 10⁻⁶ to 1 x 10⁻⁴ millibar.litre/second (for Helium gas).

The degree of compaction of the powder in the tube required to try to produce a selected leak rate may be chosen, for example, by referring to empirical data determined previously for a tube and powder of a similar specification. However, preferably the step of compacting the powder in the tube further comprises determining the leak rate of the tube after or during compaction of the powder in the tube. This may be achieved using any appropriate gas leak detector.

Preferably the method comprises the steps of supplying a gas to one end of the tube and detecting the rate at which the gas leaks from the other end of the tube after compaction of the powder in the tube.

Preferably the method comprises the steps of connecting one end of the tube to a gas supply operable to supply gas to the interior of the tube in use and one end of the tube to a gas leak detector responsive to the gas supplied. The tube may be connected to the gas supply and leak detector only when a leak rate reading is to be taken, but more preferably the tube is continually connected to the leak detector and gas supply as compaction is carried out whereby gas may be supplied through the tube as desired at stages during compaction of the powder to obtain a leak rate reading. For example, a valve may be operated to supply gas to the interior of the tube.

The tube may be connected directly to a gas supply at one end. However, preferably one end of the tube is located in a gas tight chamber into which gas may be supplied when the leak rate is to be determined. Gas may then flow from the chamber into the open end of the tube.

The compaction of the powder may be carried out in a single step, or more preferably in a plurality of stages. For example, an initial compaction of the powder may be carried out, the leak rate of the gas leak after the initial compaction determined, and, if necessary, further compaction of the powder then carried out to bring the leak rate of the device closer to the selected rate. In this way, an initial "coarse" compaction step may be carried out, before finer adjustment of the compaction level is carried out, to allow a selected leak rate to be more accurately achieved. In these embodiments, the powder is thus preferably initially compacted to a level lower than the level of compaction required to achieve the selected leak rate.

Preferably the step of compacting the powder in the tube further comprises determining the rate at which a gas supplied to one end of the tube leaks from the other end of the tube after compaction of the powder, comparing the determined gas leak rate to a selected gas leak rate, and selectively further compacting the powder to bring the gas leak rate of the tube containing the compacted powder closer to the selected gas leak rate. In these preferred embodiments, the leak rate of the tube may be measured after an initial compaction of the powder, and the measured leak rate compared to a selected leak rate to determine whether, and to what degree, any further compaction of the powder needs to be carried out to try to achieve the selected leak rate. These steps may be repeated to successively bring the leak rate closer to the selected leak rate. If the powder is compressed to too great an extent, the surface of the powder may be abraded, e.g. using a drill to increase the leak rate.

In some embodiments, the method of the present invention comprises monitoring the rate at which a gas supplied to one end of the tube leaks from the other end of the tube as the powder is compacted in the tube. In this way, the leak rate of the tube may be continually observed, allowing the manufacturer to more easily determine when the selected leak rate has been achieved. Preferably the method further comprises the steps of supplying a gas to one end of the tube and detecting the rate at which the gas leaks from the other end of the tube as the powder is compacted in the tube. In these embodiments, the method therefore further comprises the step of connecting one end of the tube to a gas supply and connecting the other end of the tube to a gas leak detector responsive to the gas supplied.

The step of compacting the powder in the tube may be carried out in any appropriate manner. For example, the powder could be compacted by exerting pressure on the powder through the walls of the tube. In such embodiments, the walls of the tube may thus be distorted in the region where the powder is located to compact the powder. However, preferably, the powder is compacted by compressing the powder axially between the ends of the tube. Axial compression may be achieved in any suitable manner, for example, using a press. Preferably the tube comprises a shoulder to enable it to be located in a press.

Preferably the step of compacting the powder comprises introducing a first plug in one end of the tube and a second plug in the other end of the tube, and moving at least one of the plugs axially towards the other plug within the tube to compress the powder between the first and second plugs. The first plug may be introduced before or after the powder is inserted in the tube. However, preferably the first plug is inserted into one end of the tube before the powder is inserted. In this way, the plug may close one end of tube, and provide a support for the powder as it is inserted into the tube at its other end. Preferably each plug is connected to a press for moving the plugs towards one another to compress the powder therebetween.

As discussed above, in preferred embodiments, the leak rate of the tube is measured after some compaction of the powder has occurred, or continuously as compaction of the powder is carried out. It is envisaged that in some cases, the plugs may be inserted into the ends of the tube in a manner which allows the passage of gas between the respective plugs and the tube but prevents the movement of powder out of the tube. In this way, a gas may be supplied to the tube at one end and detected at the other end to allow the leak rate of the device to be determined while the plugs are in place during the compaction process. It has been found that by releasing the pressure applied to the plugs to a degree relative to that applied during compaction, sufficient space maybe produced between the plugs and the walls of the tube to allow gas to flow into and out of the tube between the plugs and the walls.

In other embodiments each of the plugs comprises a bore, whereby gas may be supplied to the interior of the tube through the bore of the plug inserted in one end of the tube, and may pass out of the tube through the bore in the plug inserted in its other end. In this way, one of the plugs may be connected to a gas supply as compaction is carried out, and the other to a gas leak detector, allowing the leak rate of the gas through the powder to be continually monitored. In some preferred embodiments, the tube is maintained in a vertical position as the powder is compressed. In such arrangements, the bores should be sized appropriately to allow the passage of gas into or out of the tube, but to act as a barrier to inhibit powder from falling out of the tube as it is compressed. Preferably each plug is inserted into an end of the tube such that it projects from the end of the tube to allow it to be connected to a gas supply or gas leak detector.

Preferably the plugs are removed from the ends of the tube after compaction of the powder, and before any subsequent treatment, e.g. sintering of the reference gas leak.

The pressure exerted upon the powder during compaction will depend upon the selected leak rate it is intended to achieve, which will dictate the level of compaction required. Preferably the step of compacting the powder comprises applying a pressure of at least 20 Kg/mm² to the powder, e.g. to a pin used to compress the powder, and most preferably in the range of from 20 Kg/mm² to 500 Kg/mm².

Preferably the leak rate of the tube containing the compacted powder is determined after compaction is complete to verify that the selected rate has been achieved which will result in a desired leak rate if the gas leak is to be used straight after compaction, or which will result in a desired leak rate in the final reference leak produced after any further treatment such as sintering.

Although, as discussed above, it has been found that the compaction process used to provide the reference gas leak inevitably results in some "fixing" of the compacted powder into position, preferably the compacted powder is subjected to a further step to fix the powder in position in the tube. This step may involve heating, irradiating or sintering the powder. It has been found that subjecting the compacted powder to a further sintering step may more effectively bind particles of the powder to one another, to provide a more robust reference leak which may continue to provide a reliable leak rate over time, and even in relatively harsh conditions. Preferably the compacted powder is sintered in the tube. By "sintering" it is meant that the powder is heated in the tube to a temperature sufficient to cause the particles of the powder to bind to one another. In general, this involves heating the powder to a temperature close to, but below, its melting point, to provide some fusing of the powder to bind the particles to one another, and "fix" the powder in its compacted form. In general, a sufficient temperature to achieve sintering without melting of the powder would be in the range of up to 100°C below the melting point of the powder. Preferably the step of sintering the powder in the tube comprises heating the tube containing the compacted powder to a temperature in a range of from 900 to 1100°C, preferably in the range of from 950°C to 1150°C, and most preferably to around 1000°C.

It has been found that the sintering process may also act to clean the reference gas leak, and remove contamination which may have been introduced into the tube and powder during manufacture. In this way, contaminants which might otherwise interfere with the ability of a gas to through the reference leak may be removed. The present invention may thus provide a reference gas leak which is suitable for use with a broader range of gases, including gases which are relatively heavy, and may only move through the powder at a low flow rate, and more reactive gases. The absence of impurities or contaminants within the reference gas leak will reduce its tendency to react or absorb such gases, preventing them from moving through the leak, and may also provide a leak which may provide a more reliable and consistent leak rate over time after exposure to the environment. The gas will also be less likely to leave a residue in the leak which would need to be removed before reuse of the device.

It has been found that further advantages in terms of removal of impurities and contaminants may be achieved if the sintering step is carried out in a vacuum. Preferably the sintering step is thus carried out in a vacuum. By sintering in a vacuum, oxidation of the powder during the sintering process may also be avoided, providing a more stable gas leak, through which a wide range of gases, including heavier gases may more easily pass. By a vacuum it is meant that that the step is carried out under a pressure of less than 1 x 10⁻³ mbar. For example, the tube containing the compacted powder may be sintered in a vacuum furnace.

It will be appreciated that sintering of the compacted powder will tend to result in a change in the leak rate of the final reference gas leak i.e. the tube containing the sintered, compacted powder relative to that of the semi-completed reference gas leak after compaction of the powder, but before sintering of the powder. The effects of sintering may be determined empirically and should be taken into account when determining the selected gas leak rate to be achieved after compaction and before sintering of the powder to achieve a desired gas leak rate after sintering of the compacted powder. In general, sintering of the compacted powder tends to reduce the gas flow rate of the reference gas leak relative to that after compaction of the powder and before sintering, by up to 50%. The effect of sintering tends to be greater, the smaller the initial leak rate. It will be appreciated that subjecting the reference gas leak to sintering after compaction of the powder may therefore allow lower leak rates to be achieved, which may not be readily obtainable in practice by application of pressure alone to the powder.

The powder may be any powder which does not significantly impede the ability of a gas which the reference gas leak is intended to be used from moving through the tube. The reference gas leak may then allow the gas to pass through the powder, without reacting with the powder to remove any of the supplied gas from the system before it reaches the output of the tube, allowing low leak rates to be achieved, and allowing the leak to be used with gases supplied at low pressures, and heavier or more reactive gases. Preferably the powder is relatively inert with respect to the gas with which the reference gas leak is intended to be used. Less reactive powders will also be less likely to react with contaminants and substances in the surrounding atmosphere, increasing the reliability of the leak and the range of gases with which it may be used, and may provide more stable operation even under more extreme conditions of e.g. temperature.

It will be appreciated that, depending upon the powder used, it may be necessary to wait for a certain time between uses of the leak, to allow any gas which has built up in the powder to leave the system. However, preferably the powder does not absorb the gas with which the reference leak is to be used. In this way, the reference gas leak may be used repeatedly, without a significant delay between consecutive uses.

Preferably the powder is a metal powder. For example, the powder may comprise a pure metal or metals, metal compounds e.g. metal oxides or alloys, or a mixture thereof. For example, the metal may be a transition metal such as aluminum, vanadium, titanium or may be a metal such as lead, or a metal oxide such as magnesium oxide. However, preferably the powder is a stainless steel powder. It has been found that stainless steel is appropriate for providing a reference gas leak which may be constructed to have a broad range of different leak rates, depending upon the degree to which the powder is compacted, and may be used with a wide range of gases. For example, a reference gas leak having a stainless steel powder may be used with heavier gases such as refrigerants. Stainless steel tends to release a gas applied to it readily, enabling the reference leak to respond rapidly once a gas is supplied to it, and be rapidly ready for reuse. Stainless steel is also relatively unreactive, and may therefore operate reliably over time, even in relatively harsh environmental conditions, e.g. under conditions of high temperature, or pressure, and in environments where contaminants are present. The response and reliability of a gas leak containing a stainless steel powder is also less likely to be affected by subsequent treatment of the leak, for example welding into a housing, increasing the range of potential applications. Stainless steel also exhibits resistance to rusting.

The particle size of the powder inserted into the tube before compaction may be selected at appropriate, with respect to the leak rate to be achieved. Preferably the powder comprises particles having a diameter in the range of from 10 to 500 µm, It will be appreciated that, in general, the smaller the particle size, the smaller the leak rate which may be obtained for a given pressure applied during compaction of the powder. Thus the use of a powder having a smaller particle size may allow lower leak rates to be more easily achieved.

The tube may be formed from any material which does not significantly interfere with the passage of the gas rate which the reference leak is intended to be used from the inlet to the outlet of the leak. The considerations in selecting a material for the tube are similar to those involved in selecting the material to be used as the powder. Any of the materials described above which are suitable for use as the powder may therefore be used to form the tube. Preferably the tube is impervious with respect to the gas with which the reference leak is intended to be operated. Preferably the tube is fluid impervious. Preferably the tube comprises the same, or a similar material to the powder. In this way, the tube and powder may e.g. expand and contract together on changes in environmental conditions, such as temperature, allowing a selected leak rate to be more reliably maintained under different conditions. Preferably, the tube is a metal tube, and most preferably is a stainless steel tube.

It will be appreciated that in comparison to conventional reference gas leaks, which do not use a compacted powder, the present invention allows a device providing even a low leak rate to be obtained, without needing to use a particularly large amount of powder, or path length of powder. It is thought that variation of the leak rate over a larger range may be achieved using compaction of a powder in accordance with the invention, because the compaction allows the pore size and density of pores in the powder to be varied over a relatively wide range, and the pore size and density will tend to be a maj or factor in determining the leak rate of the device.

As the leak rate is determined primarily by selecting the degree to which the powder is compacted in the tube, rather than by varying the length of the tube, the length of the tube of a reference gas leak in accordance with the invention may be chosen freely as appropriate for an intended use of the leak. The length of the tube may depend upon the intended application of the reference gas leak, e.g. the way in which it is to be incorporated into an appliance, or connected to other devices. The length of the tube may be, for example, of any length within the range of from about 0.5 cm to about 50 cm. However, preferably the length of the tube is less than 10 cm, more preferably less than 5 cm, most preferably less than 1.5 cm and most preferably in the range of from 0.5 cm to about 2 cm. By the length of the tube, it is meant the length of the path through the interior of the tube which the gas must traverse to move from one end of the tube to the other. The length of the tube may be adjusted after compaction (and sintering) of the powder within it, to provide a length suitable for use in a particular application.

Preferably the length of the tube occupied by the compacted powder is less than 10 mm, preferably less than 5 mm, and most preferably in the range of from 1.5 mm to about 2 mm. The length of the tube occupied by the compacted powder is the length of the path through the interior of the tube occupied by the compacted powder which the gas must traverse when moving through the tube.

Preferably the compacted powder occupies no more than 50% of the length of the tube, preferably no more than 20% of the length of the tube, and most preferably no more than 10% of the length of the tube.

Preferably the compacted powder is spaced from at least one end of the tube. Preferably the compacted powder is located at a distance of at least 2 mm from an end of the tube, and preferably by at least 5 mm.

It will be appreciated that, depending on the application, the tube may be of any suitable configuration. For example, the tube may be coiled along all, or a part of its length, or may incorporate a bend. Preferably the tube is of uniform horizontal cross-sectional width. Preferably at least the part of the tube occupied by the compacted powder is straight, and most preferably the entire tube is straight. Preferably the tube is not coiled. This may allow a gas to more easily flow through the tube to be incident upon the powder, and facilitate the ease with which the tube may be incorporated into a housing, or connected to e.g. a gas supply or gas leak detector and other appliances in use.

The tube may be of any shape in vertical cross section. However, preferably the tube is a cylindrical tube. The tube may be of uniform or varied vertical cross sectional width. For example, the tube may incorporate a region of reduced horizontal cross-sectional width. However, preferably the tube is uniform in vertical cross sectional width. This may facilitate the ease with which gas may flow along the tube. The internal diameter of the tube may be selected as appropriate to provide a leak suitable for an intended application. It will be appreciated that the internal diameter of the tube will determine the surface area of the compacted powder upon which gas supplied to the tube is incident, and thus is a factor in determining the leak rate of the device. The larger the internal diameter of the tube, the larger the leak rate, as the compacted powder will present a greater surface area through which the gas may move. Preferably the internal diameter of the tube is less than 10 mm, and more preferably less than 5 mm. Preferably the internal diameter of the tube is greater than 1.5 mm, and more preferably greater than 2 mm. An internal diameter of 5 mm may be suitable for producing reference leaks having a leak rate of the order of 1 x 10⁻² mbar.litre/sec. It will be appreciated that where the tube is not circular in vertical cross section, the ranges of diameter may be applied to the width of the leak in vertical cross section.

Preferably the reference gas leak of the present invention further comprises an inlet adapted for connection to a gas supply. Preferably the reference gas leak comprises an outlet adapted for connection to a gas leak detector. The configuration of the inlet and outlet will depend upon the intended application of the device. For example, screw fittings or vacuum plates may be provided at the inlet and/or outlet. In some preferred embodiments, at least one end of the tube comprises a vacuum flange.

The tube may be incorporated into a housing to render it appropriate for a given application. For example, a connector may be provided at the inlet and/or outlet of the tube to allow the tube to be more easily connected to e.g. a gas supply or gas leak detector. The tube may be incorporated into a protective housing. The tube may be incorporated into a housing in any suitable manner. As discussed above, the reference gas leaks of the present invention are relatively robust, and may withstand relatively extreme conditions of pressure and temperature which may be encountered when incorporating the tube into a housing. Preferably the tube containing the compacted powder is welded into a housing.

The present invention extends to the use of the reference gas leak in accordance with any of the embodiments of the invention to calibrate a gas leak detector.

In accordance with a further aspect of the present invention there is provided a method for calibrating a gas leak detector using a reference gas leak comprising a tube having an inlet an outlet and a compacted powder fixed therebetween, whereby a given gas supplied to the tube through the inlet at a predetermined pressure passes through the compacted powder to leak from the outlet at a known rate; the method comprising supplying the given gas at the predetermined pressure to the inlet of the tube, connecting the outlet of the tube to a gas leak detector, and comparing the gas leak rate indicated by the detector to the known leak rate of the reference gas leak.

As discussed above, as they incorporate a compacted powder, reference gas leaks in accordance with the present invention may be used in conjunction with a wide range different gases. The gas with which the selected leak rate of the reference gas leak is specified should be chosen with regard to the gas or gases with which the gas leak is intended to be used in practice. For example, gas leak references tend to be used in the fire control industry may have a leak rate defined with respect to Halons. Other inert gases, such as argon may also be used. In some preferred embodiments, the gas is a gas used in the coolant system of a refrigeration or air conditioning system, such as freons, chlorofluorocarbons (CFCs), such as chlorodifluoromethane-R22, trichlorofluoromethane-R22, trichlorotrifluoroethane-R113, dichlorodifluoromethane-R12, and other gases such as tetrafluoromethane, tetrafluoroethane-R134A (available under the trade designation Genetron® tetrafluoroethane) and dichlorotrifluoroethane. Th e reference gas leak may then be used to calibrate leak detectors used in these contexts.

Preferably, however, the gas is Helium or Hydrogen. Many gas leak detectors are responsive to helium, for example helium mass spectrometers. Helium has been found to be particular suitable for use in gas leak detection, as it is lighter than air, and tends to pass easily even through small leaks. As helium is an inert gas, and is found in only small quantities in the natural environment, the likelihood of results being affected by background quantities of the gas present in the atmosphere or system, is reduced. In general, in applications where lower leak rates are required, it is preferable to use lighter gases, such as helium, which may more readily and easily penetrate the compacted powder

Preferably the method comprises supplying the gas at a plurality of different predetermined pressures to the reference gas leak, and comparing the leak rate indicated by the detector at each of the plurality of different gas pressures with the known selected leak rates of the reference gas leak for the gas supplied under the different respective pressures.

In some preferred embodiments, the reference gas leak further comprises a gas supply connected to the inlet. Preferably the gas supply is a pressurized gas supply. The present invention extends to a reference gas leak in accordance with any of the embodiments described in combination with a source of pressurized gas. Preferably, the gas supply is adapted for providing a given gas to the inlet of the tube at a plurality of different pressures. In this way, a user may select different pressures of the gas to obtain different selected leak rates of the reference leak for checking the calibration of a gas leak detector at more than one flow rate.

Although the main use of the reference gas leak in accordance with the invention has been described in the context of calibrating gas leak detectors, it will be appreciated that the reference gas leak may be used for other purposes. For example, the reference gas leak may used as a valve to provide a selected gas flow rate into or out of a system. For example the reference gas leak may be connected to a vacuum system to allow the pressure within the vacuum to be gradually increased at a known rate as a gas is supplied to the inlet of the reference gas leak from the atmosphere, or from a pressurized source. Conversely, a reference gas leak in accordance with the invention may be used to depressurize a pressurized vessel by connecting it between a pressurized vessel, and the atmosphere, or a vessel at a lower pressure. It has been found that reference leaks in accordance with the invention may provide a consistent input or output flow when used in such contexts, a fast response, and may be sufficiently "clean" not to introduce contaminants into e.g. vacuum systems.

A reference gas leak may be connected to regions in which different pressures exist to control the rate at which gas flows from one region to the other, delaying the time until which pressures are equalized. This may be appropriate e.g. in submarine applications, or to delay the opening or closing of vacuum or pneumatic valves, pistons etc.

The reference gas leak may act as a filter impeding the passage of dust or debris from one end to the other e.g. in vacuum or other pressure flow applications. Reference gas leaks for use in such applications may have relatively high flow rates.

The reference gas leak may act to atomise a fluid, such as a gas or liquid passing through the compacted powder.

The reference gas leak may be used as a conductance, for example to provide an appropriate input gas flow rate to a system. For example, certain components of some gas leak detectors require low pressures, below atmospheric pressure to operate. By connecting a reference gas leak between the input of such a component, and the atmosphere, the reference gas leak may provide an appropriate lower input flow rate into the components, allowing the detector to be operated under atmospheric pressure, and without needing to connect it to a vacuum system. This may allow detectors to be produced which may be suitable for hand held use.

The reference gas leak may also be connected to the end of a vacuum line to act as a fixed conductance. For example, leak detectors which require a low or vacuum pressure to operate are often connected to one end of a vacuum probe, which may be several metres in length. The other end of the probe may be passed over the outside of a pressurized tank which is being tested for leaks using the "overpressure method" to detect any leakage of the gas used to pressurize the tank. Gas from the atmosphere, potentially containing the test gas thus passes into the probe under atmospheric pressure. A reference gas leak may be connected to the end of the vacuum probe remote from the leak detector to "step down" the pressure of the gas entering the probe from atmospheric pressure to a vacuum pressure suitable for operation of the leak detector. Other appliances, such as an auxiliary pump may be connected to the vacuum probe. It will be appreciated that a plurality of reference gas leaks may connected between the end of the vacuum probe and the various appliances to provide appropriate input pressures to the different appliances.

It is envisaged that a plurality of reference gas leaks each having a different selected leak rate for a particular gas supplied at a particular pressure may be connected to one another in series and/or parallel, to allow a plurality of different selected leak rates to be provided by the combined outputs of the reference leaks when the gas is supplied at the given pressure. Valves may be associated with the gas leaks, allowing the combined leak rate of the system to be altered by directing the path of a gas through the system of gas leaks appropriately.

Although the reference leak has been described above in relation to providing a gas leak, it will be appreciated that the reference leak may be used to provide a reference leak for any fluid, including some liquids.

Some preferred embodiments in the present invention will now be described, by way of example only, and with reference to the accompanying drawings, in which:
Figure 1 is a horizontal cross-sectional view of a reference gas leak in accordance with the present invention;
Figure 2 is a view of the reference gas leak of Figure 1 welded into a housing in accordance with one preferred embodiment of the invention;
Figures 3A to 3E illustrate a method for producing the reference gas leak of Figure 1 in accordance with a preferred embodiment of the invention;
Figure 4 illustrates the reference gas leak of Figure 1 incorporating a gas supply in accordance with a preferred embodiment of the invention;
Figure 5 illustrates the housed reference gas leak of Figure 2 connected to a gas supply and vacuum plate suitable for use in vacuum applications;
Figure 6 illustrates schematically the use of a reference gas leak in accordance with the present invention to calibrate a gas leak detector,
Figure 7 illustrates the use of a reference gas leak in accordance with the present invention being used as a bleed valve;
Figure 8 illustrates the use of a reference gas leak in accordance with the present invention as a conductance;
Figure 9 illustrates the way in which a plurality of reference gas leaks in accordance with the invention may be used to provide a plurality of different flow rates;
Figures 10 to 14 illustrate some further applications of reference gas leaks in accordance with the invention;
Figure 15 illustrates an alternative method which may be used to compact the powder to provide a reference gas leak in accordance with the invention.

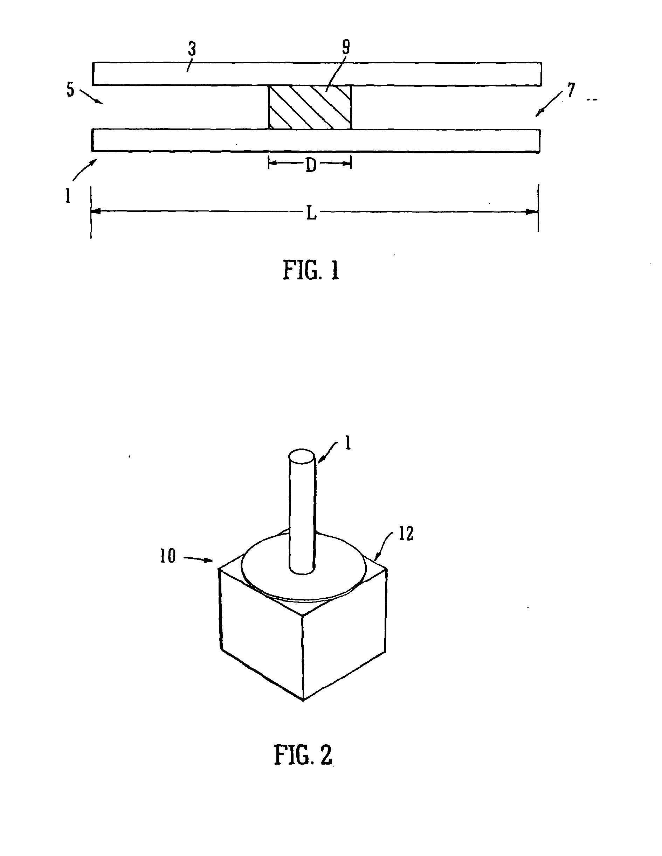

The reference gas leak 1 as shown in Figure 1 is in the form of an open ended stainless steel tube 3, having an inlet at one end 5, and an outlet 7 at its other open end. A plug 9 of compacted sintered stainless steel powder is located in the tube 3 between its ends. The tube 3 is cylindrical and has an internal diameter of 2 mm.4. The length of the tube L is around 2 centimeters. The length L of the tube may be selected as appropriate depending upon the context in which the reference leak is to be used. However, it will be appreciated that the length of the tube does not significantly effect the leak rate of the gas leak 1, which is determined principally by the degree of compaction of the sintered, compacted plug of powder 9. The length by which the tube extends beyond the plug 9 on either side may thus depend upon the intended application of the reference gas leak e.g. the nature of any housing in which the gas leak is to be incorporated, and of any appliances to which it is to be connected. The plug 9 is spaced from the ends of the tube 3. The plug of compacted, sintered powder extends a distance D of around 2 mm along the length of the tube. The plug 9 thus extends around 10% of the length L of the tube 3.

In use, a gas entering inlet 5 at a known pressure moves through the bore of tube 3, and is incident on the sintered compacted powder 9. The gas moves through the sintered compacted powder, to emerge from the outlet 7 of the reference gas leak 1 at a known, lower rate than that with which it entered the reference gas leak 1.

Figure 2 illustrates the way in which the reference gas leak 1 may be incorporated into a housing 10. The reference gas leak 1 is welded at one end into a housing 12 which is provided with an internal screw 4 to allow the reference gas leak to be fitted to a gas supply or gas leak detector, for example, as described below. It will be appreciated that the nature of the housing, and any fittings which it contains will depend upon the intended use of the reference gas leak. For example, the housing may enclose the tube 3 to protect it in some applications, e.g. where the device may encounter extreme pressures or temperatures.

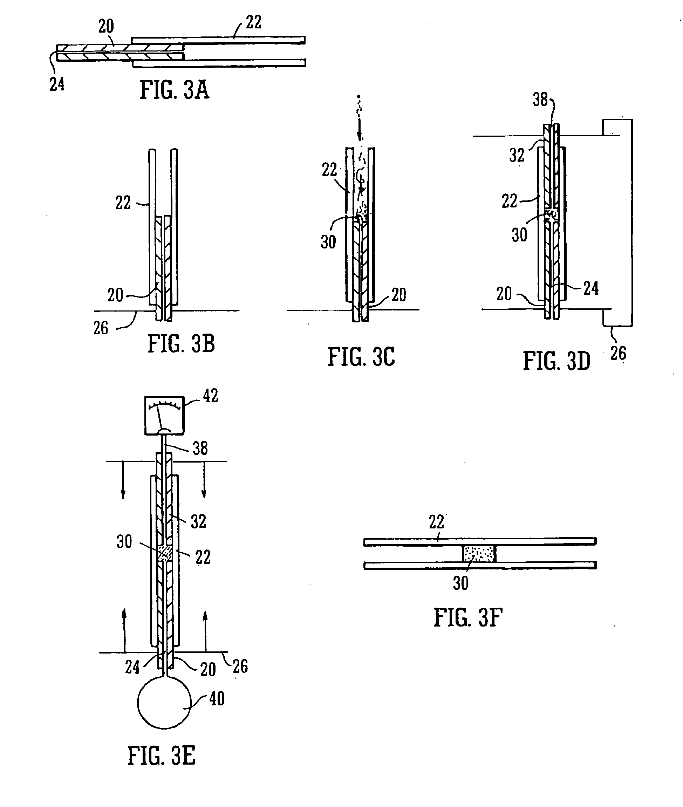

Manufacture of the reference gas leak of Figure 1 will now be described with reference to Figures 3A to 3E. A hardened steel plug 20 is inserted a predetermined depth into one end of a cylindrical stainless steel tube 22 such that one end of the hardened steel plug extends beyond the end of the cylindrical steel tube 22. The hardened steel plug 20 has an internal bore 24 of dimensions appropriate to allow gas to flow into the tube 22, but to impede the movement of powder 30 out of the tube. The stainless steel tube 22 is of the dimensions described in relation to Figure 1.

The assembled plug 20 and tube 22 are then transferred to a press 26 (Figure 3B). The tube 22 is supported vertically in a jig (now shown). the tube 22 may include a shoulder for locating the tube in the jig.

Stainless steel powder comprising particles of diameter in the range of from 10 to 500 microns is inserted into the open end of the tube 22 (Figure 3C). The bore 24 of the hardened steel plug 20 is sufficiently small in diameter that the powder 30 is supported on the upper surface of the plug 20, and prevented from falling out of the lower end of the tube 22. It has been found that the stainless steel does not tend to hold onto a test gas supplied to it, instead allowing the test gas to easily pass through it. This means that the reference gas leak may be used repeatedly, without needing to wait for a significant time between successive uses for any residual gas in the system to dissipate. The gas leak will also therefore not tend to contaminate e.g. vacuum systems if it is left connected to such systems after gas has been passed through it. However, it will be appreciated that other powders may be used.

A second hardened steel plug 32 is then inserted into the open top end of the tube 22. The second plug 32 is similar in construction to the first plug 20. In this way, the powder 30 is trapped between the first and second steel plugs 20,32. The second steel plug is also connected to the press 26 (Figure 3D). In this way, the press 26 may be operated to move the plugs 20, 32 axially towards each other within the tube 22.

A source of helium gas 40 is connected to the fine bore 38 of the lower steel plug 20. The source 40 supplies helium at a known pressure. A helium leak detector 42, such as a helium mass spectrometer, is connected to the fine bore 38 of the upper steel plug 32.

The press 26 is operated, to move the plugs 20,32 axially towards one another in the direction of the arrows in Figure 3E, to compress powder 30 between the plugs 20, 32. The helium gas continually moves through the powder 30 as it is compacted to emerge at the end of the fine bore 38 of the plug 32 and enter detector 42. In this way, the rate at which the helium gas leaks from plug 32 may be continually monitored by monitoring the output of detector 42. When the flow rate of helium gas detected by detector 42 reaches a desired rate, compaction of the powder 30 is stopped. The steel plugs 20,32 are then removed from the steel tube 22, to leave the compacted plug of powder 30 which gave rise to the selected leak rate in place.

The leak rate of the tube containing the compacted powder may then be verified again by connecting one end of the tube 22 to the source of gas, and the other to the detector responsive to the gas, once more. The same detector may be used, or a more sensitive detector. If necessary, further compaction of the powder may then be carried out in the manner shown in Figure 3E to achieve the selected leak rate. Thus the powder may be initially compacted to a level slightly below that required to produce a selected leak rate, and a finer measurement of leak rate carried out, to establish how much more compaction is required to more accurately arrive at the desired selected leak rate. If the leak rate is too small, e.g. the power is compacted to too great an extent, the surface of the powder may be abraded e.g. with a drill bit to increase the leak rate.

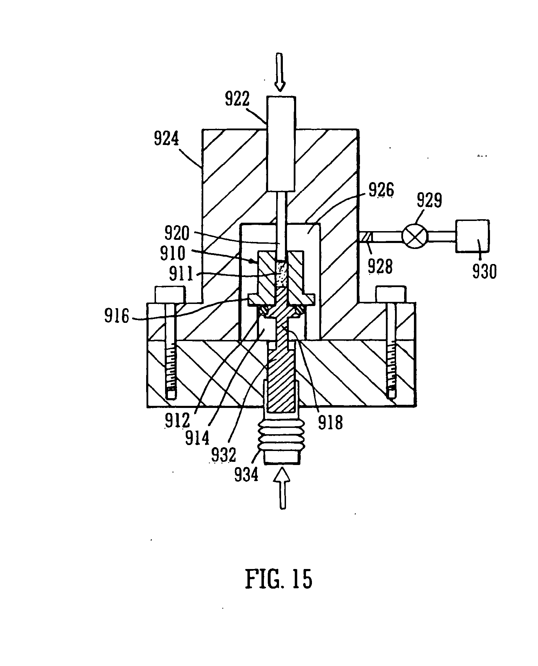

It will be appreciated that rather than continually monitoring the flow rate of helium gas through the powder 30 as it is compacted, measurements of flow rate may be carried out at various times during compaction, to determine whether further compaction is to be carried out. This may be carried out in situ, or by removing the tube 22 from the press 26. An alternative method in which the leak rate is determined at various stages during compaction of the powder is described with reference to Figure 15. In other cases, no measurement of the flow rate of gas through the compacted powder need be taken. For example, the operator of the press may use empirical data established for similar conditions, and types of powder etc. to determine the pressure at which the press must be operated to achieve a certain level of compaction of the powder which will be expected to give rise to a leak rate in a desired range.

The maximum pressure to which the powder 30 is subjected during a compaction process will be the most significant factor in determining the leak rate of the finished reference gas leak. The maximum pressure exerted during compaction of the powder will therefore depend upon the intended application of the reference gas leak, and the leak rate which it is to provide. The subsequent sintering step may cause a change in the leak rate of the device compared to that achieved after compaction of the powder. This should be taken into account when selecting the leak rate to be achieved through compaction of the powder. Typically, a pressure in the range of from 20 Kg/mm² to 500 Kg/mm² is applied to the pins.

The skilled person would understand that various other factors, such as the grade, nature, particle size of the powder and the diameter of the tube, which defines the surface area of the compacted powder exposed to the gas may also have an effect on the leak rate of the reference leak after compaction of the powder. The effect of such factors may be determined empirically to establish the amount by which the level of compaction of the powder should be adjusted to achieve a selected leak rate under a particular set of conditions. However, it will be appreciated that by using the method of Figure 3E, and continually monitoring the flow rate of the device as the powder 30 is compacted, the skilled person may provide a reference gas leak having a desired flow rate, without the need to understand precisely the effect of all such factors. The use of this method also allows the effect of any contaminants, such as water vapor or oil which might be present in the system to be taken into account, and the effect of variation in the surrounding conditions, e.g. temperature and pressure to be accounted for.

Once the powder 30 has been compacted to a desired degree, and the plugs 20, 32 removed from the tube 22, the tube 22 containing the compacted powder is inserted in a vacuum furnace (Figure 3F). The tube containing the compacted powder is heated in the furnace to "sinter" the powder. The temperature at which the furnace is operated will depend upon the nature of the powder, the tube and thus the temperature to which the tube must be heated to achieve sintering of the compacted powder within it. In general, sintering involves heating the powder to a temperature below its melting point to cause it to bind together, and form a coherent mass. In this way, the level of compaction of the powder achieved during the compaction step of Figure 3E may be maintained when the reference leak is subsequently used. It has been found that a temperature of between 900 to 1100°C is appropriate when the powder is a stainless steel. As the sintering is carried out in a vacuum furnace, the powder will not be oxidized, and there will be no contaminants surrounding the tube which might react with the powder. It has been found that the heating step also acts to clean the powder, and remove substances which might otherwise interfere with the operation of the leak. The vacuum pressure used during sintering is less than 10⁻³ mbar.

The materials of the powder and tube may be selected as appropriate, with regard to the leak rate is to be achieved. It has been found that stainless steel is particularly appropriate, as stainless steel does not rust, and allows a relatively large number of gases to be used with the device, as it tends not to react with them, and thus prevent their passage through the device. By forming the tube and powder of similar or identical materials, more consistent operation of the reference gas leak may be obtained, as the tube and powder will tend to behave similarly under changes in environmental conditions, e.g. temperature changes.

The leak rate of the device may change as a result of the sintering step, in comparison to that determined after compaction of the powder 30. After sintering the powder, the leak rate of the device is checked for a given gas supplied at a known pressure. The rate at which the gas flows through the compacted, sintered powder may then be taken to be the leak rate for the reference leak for that gas under that pressure. The reference leak may then be certi fied as having a given leak rate when used with the specified gas or gas supplied at the specified pressure. It will be appreciated that the leak rate may be different for different gases, and under different pressures of application of the gas. The leak rate of the device under these different conditions may be determined, and the device certified as having a plurality of different leak rates under the different specified conditions.

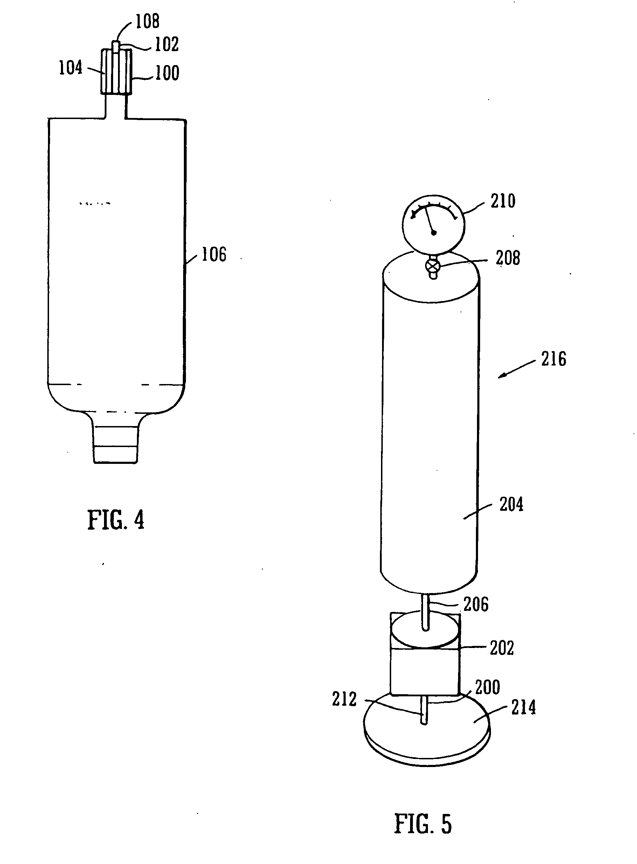

After manufacture, the reference gas leak may be combined with a source of pressurized gas as shown in Figure 4. The reference gas leak 100 comprises a stainless steel tube 102 containing a compacted, sintered stainless steel powder (not shown), as described in relation to Figures 1 and 3A to F incorporated in a housing 104 incorporating a screw bore. The housing 104 is connected to the inlet of a cylinder 106, which supplies a given gas under a known pressure when a valve in the housing 104 is opened (not shown). In this way, the reference gas leak is provided in combination with a source of a pressurized gas, whereby it provides a known predetermined leak rate of the gas from its outlet 108 on opening of the valve in the housing 104, to allow the pressurized gas to be supplied to its inlet. A reference gas leak may therefore be provided in combination with a source of the gas under the pressure with which its leak rate is defined, ensuring that the reference gas leak will provide the defined leak rate in use.

Figure 5 shows another device 216, in which a reference gas leak 200 incorporated in a housing 202 of the type shown in Figure 2 is connected to a cylinder of pressurized gas 204 at its inlet 206. In this embodiment the cylinder of pressurized gas further comprises a valve 208 and a gauge 210 to allow the gas to be supplied at different pressures to the inlet of the reference gas leak 206. The outlet of the reference gas leak 212 is connected to a vacuum plate 214, to allow it to be attached to a vacuum system, to calibrate a vacuum type gas leak detector, or to provide an predetermined input pressure to a vacuum system as described in more detail below. The device shown in Figure 5 is suitable for use in testing a helium mass spectrometer.

In this embodiment, the device 216 may be operated to provide a variety of different leak rates of gas from the outlet of the reference gas leak 212 by varying the pressure under which the gas is supplied to the inlet 206 using valve 208.

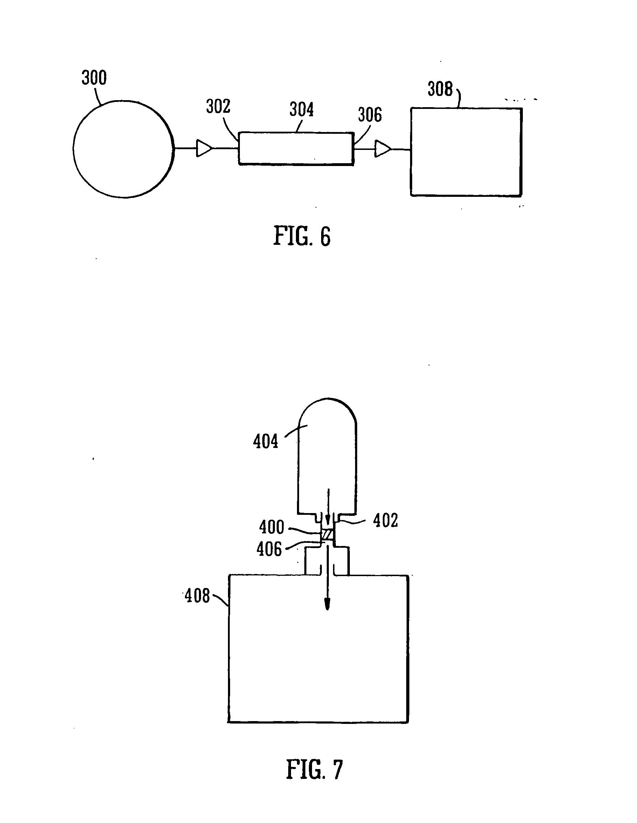

Operation of a reference gas leak in accordance with the invention to calibrate a gas leak detector will now be described with reference to Figure 6. A source of pressurized gas 300 is attached to the inlet 302 of the reference gas leak 304. A gas leak detector 308 is attached to the outlet 306 of the reference gas leak. The reference gas leak 304 may be provided with appropriate fittings for connection to the gas supply and to the reference gas leak detector, for example as shown in Figures 2, 4 or 5.

The gas supply 300 is operated, to provide gas of a known type at a known pressure to the inlet 302. The gas passes through the reference gas leak, emerging at the outlet at the predetermined leak rate which the reference gas leak is known to have for the given gas under the given pressure. The flow rate of the gas indicated by the gas leak detector 308 is compared to the known predetermined leak rate of the reference gas leak. The calibration of the gas leak detector may be modified as appropriate until it provides an output corresponding to the known predetermined output leak rate of the reference gas leak. The same reference gas leak may be used to calibrate the gas leak detector by checking its operation at a number of different pressures, by varying the pressure at which the gas is supplied to the inlet 302 of the reference gas leak 304 from supply 300, if the supply 300 is of a variable pressure type, as shown in Figure 5, or by supplying a different gas to the inlet 302.

The device may be handheld, for example for testing use accuracy of handheld leak detector units used in servicing of e.g. refrigerants, freezers, cold counters, beer cellars, air conditioners etc, or may be suitable for service workshop use. In other applications, the reference gas leak may be provided on a production line for checking the sensitivity of gas leak detection equipment provided on the production line e.g. for testing automotive or fluid system parts or leaks.

Figure 7 shows the use of a reference gas leak 400 in accordance with the present invention as a bleed valve. The inlet 402 of the reference gas leak 400 is connected to a source 404 which supplies a given gas under a known pressure. The outlet 406 of the reference gas leak is connected to the inlet of a vacuum system 408. In this way, the reference gas leak 400 may supply gas at a known predetermined flow rate from the source 404 to gradually increase the gas pressure in the vacuum system 408 at a known constant rate. In this way, the reference gas leak 400 acts as a bleed valve. Conversely, it will be understood how the reference gas leak may be connected at one end to a vessel pressurized above atmospheric pressure, and with the other end exposed to the atmosphere to act as a vent, allowing a reduction in the pressure in the pressurized vessel at a controlled rate corresponding to the leak rate of the reference leak for the gas in the vessel at its current pressure.

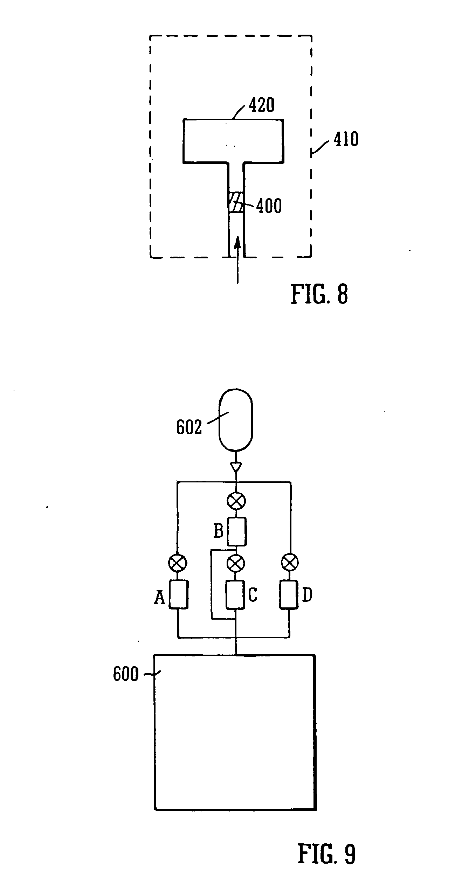

Operation of the reference gas leak 400 to provide an input pressure to a component of a gas leak detector which operates below atmospheric pressure will now be described with respect to Figure 8. Reference gas leak 400 is connected between the atmosphere and the inlet to an analyser 420 of the gas leak detector 410. Gas is incident upon the inlet of the reference gas leak from the atmosphere and passes through the reference gas leak 400 to emerge into the analyser 420 at a predetermined flow rate suitable for operation of the analyser 420.

In this way, the reference gas leak may be constructed to operate under atmospheric pressure, with reference gas leak 400 acting to "step down" the atmospheric pressure to a level suitable for operation of the components within the detector, which may operate only under a reduced e.g. vacuum pressure. This may provide a more portable and adaptable detector which need not be connected to a vacuum system in use. A number of reference gas leaks may be arranged, for example, in series, within a gas leak detector or other device, to provide different appropriate input pressures to different components of the system. For example, a first gas leak detector may provide a reduction from atmospheric to a lower pressure for a first component of the system, with a second reference gas leak being arranged on the other side of that component to "step down" the pressure to a second lower level, to allow other parts of the system to operate.

For example a first reference gas leak acting as a first conductance from atmosphere may reduce pressure from atmospheric to 1 x 10⁻² mbar to act as a supply for vacuum part of the system. A second reference gas leak may then be located downstream of the vacuum to further reduce the pressure for input to an analyser from 1 x 10⁻² mbar to 1 x 10⁻⁵ mbar.

Figure 9 shows how a number of reference gas leaks may be arranged in parallel and/or series, with valves arranged between them to provide a number of different input pressures to a vacuum system 600. A source 602 of a known gas pressurized to a known pressure is connected to the inputs of three different gas leak detectors A, B and D, which each have different known leak rate for the gas supplied under the pressure of the supply 602. A valve is arranged upstream of each of the gas leaks. A second gas leak C is arranged downstream of reference gas leak B. The outputs of gas leaks A, C and D are connected to an inlet of vacuum source 600. In use, the valves associated with each of the reference gas leaks may be operated to direct gas from the pressurized source 602 through selected ones of the reference gas leaks to provide a desired input pressure to the vacuum system 600.

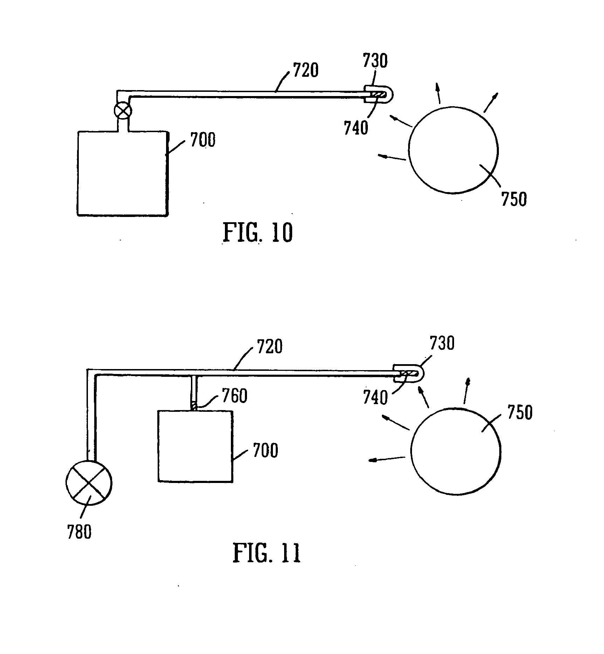

Some further applications of reference gas leaks in accordance with the invention will now be described with reference to Figures 10 to 14.

Figure 10 shows the reference leak being used as a fixed conductance at the end of a vacuum line when testing for leaks using a vacuum probe. A vacuum pipe 720 of around 2 m in length is attached at one end to a leak detector 700 and to a probe 730 at the other end. A reference gas leak 740 is located in the probe 730. The leak detector 700 is a Helium mass spectrometer which requires vacuum pressures in order to operate. A tank of gas 750 is pressurized with Helium gas in an "over pressure" leak test. Gas leaking from the tank 750 passes into the probe 730 and through the reference gas leak 740. The reference gas leak 740 reduces the pressure of the gas entering the probe 730 from atmospheric pressure to a vacuum pressure of around 1 x 10⁻⁵ mbar to allow its detection by leak detector 700.

Figure 11 shows a similar arrangement, but in which two reference gas leaks are used to create appropriate input pressures to the leak detector 700 and an auxiliary pump 780. Like reference numerals refer to the same components as Figure 10. The pipe 720 is around 50 m long in this application. In this case the first reference gas leak 740 reduces the pressure of gas entering the probe 730 to around 1x10⁻² mbar to provide an appropriate input pressure to the auxiliary pump 780. A second reference gas leak 760 is provided at the inlet to leak detector 700 to reduce the pressure in the pipe from 1 x 10⁻² mbar to a vacuum pressure of 1 x 10⁻⁵ mbar.

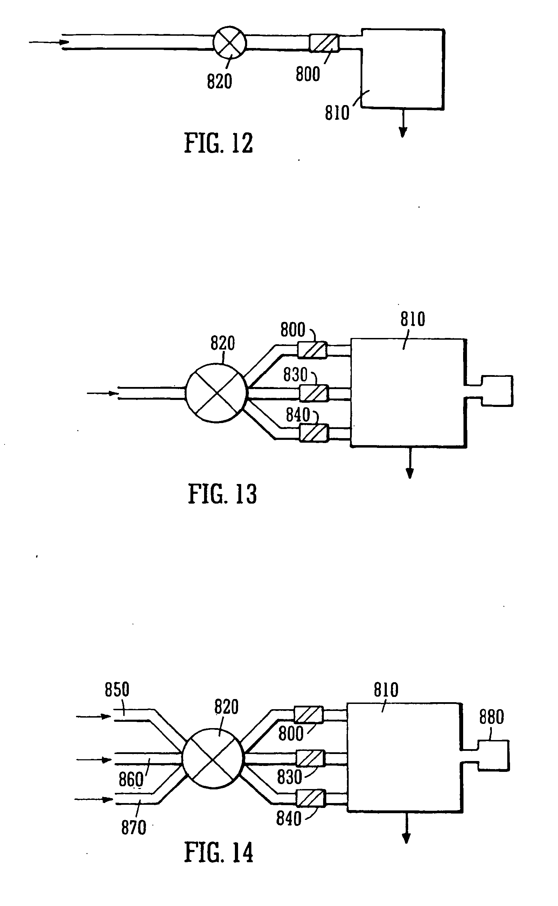

Figure 12 shows a reference gas leak 800 being used to provide an appropriate input pressure to a vacuum chamber 810. Gas passes through valve 820 and reference gas leak 800 to enter the vacuum chamber 810. The reference gas leak 800 provides a controlled increase in pressure in the chamber 810. For example, the leak may be used to raise the pressure in the vacuum chamber to a new known level, e.g. from around 1 x 10⁻⁶ mbar to around 1 x 10⁻⁵ mbar for process work. The reference leak may therefore replace a conventional needle valve. Gas may then flow from vacuum chamber 810 to pumps in the direction of the arrow in Figure 12.

Figure 13 shows how a plurality of reference gas leaks 800, 830 and 840 may be connected between valve 820 and the vacuum chamber 810 to provide a plurality of different input flow rates to the chamber 810 when gas is supplied through valve 820 under a known pressure. In this embodiment, the valve 820 may include a rotary selector to enable gas to be directed through the appropriate reference leak to provide a desired input pressure. For example, the reference leaks 800, 930 and 840 may respectively provide input flow rates of 1 x 10⁻⁵ , 1 x 10⁻⁴ and 1 x 10⁻³ mbar.ltr/sec.

Figure 14 shows a similar arrangement to Figure 13. However, in this arrangement three different inlets 850, 860 and 870 to the valve 820 are provided. In this way, the gas supplied and the reference gas leak through which the gas passes may both be selected providing a wider range of potential input flow rates to the vacuum chamber 810. Each reference gas leak 800, 830 and 840 provides a different known input flow rate to the chamber 810 for the three different gases. In this arrangement, a residual gas analyser 880 is provided to measure the partial pressures of the inlet gas.

Other applications of reference gas leaks in accordance with the invention include flow restrictor applications in which the gas leak is connected between two chambers of different pressures. The reference leak may then act to control the rate that equalization of pressures between the chambers occurs, effectively providing a time delay before equalization dependent upon the flow rate provided by the leak. For example, reference gas leaks may be used in this way to delay the pressure rise to atmospheric pressure when venting a turbo molecular pump, allowing the pump to slow down without excessive loading of the rotor blades. The leaks may also be used to delay the opening or closing of vacuum or pneumatic operation valves or pistons.

A reference gas leak with a relatively high flow rate may be used as a filter to prevent movement of dust or debris into a system, particularly a vacuum system.

The reference gas leaks may be used to atomise or diffuse gases or liquids supplied to the reference gas leak under high pressure.

An alternative process which may be used to manufacture the reference leak in accordance with the invention will be described with respect to Figure 15. In this arrangement, the leak rate of the tube is determined at stages during compaction of the powder in the tube, rather than continuously as compaction of the powder is carried out. A cylindrical steel tube 910 is cleaned in alcohol. The tube 910 is checked by running a drill through its center to verify the integrity and diameter of the hole through its center. An O-ring 912 is located over a threaded area of a leak press base 914. The tube 910 comprises a shoulder 916 at one end. The tube 910 is screwed onto the leak press, with the shoulder 916 lowermost, and compressing the O-ring 912 between the shoulder 916 and the leak press base 914. In this position, a lower pin 918 of the leak press base extends into the lower end of the tube 910.

Stainless steel powder 911 is tipped into the upper open end of the tube 910 to fill it to the top. An upper pin 920 attached to a plunger 922 is introduced into the top of the tube 910 to compress the powder 911 between the upper pin 920 and the lower pin 918. The upper pin 920 is then withdrawn from the tube 910, the powder level replenished to the top of the tube 910 again, and the upper pin 920 inserted once more to compress the powder again.

A cover 924 is located over the tube 910. The plunger 922 connected to the upper pin 920 extends through the cover 924 and is connected to a press. The cover 924 defines a closed fluid and gas tight chamber 926 surrounding the upper end of the tube 910. A bore 928 extends through the cover 924 and is connected to a source of helium gas 930. A valve 929 is located between the source of helium gas 930 and the inlet 928 to the chamber 926.

The lower pin 918 resides within a fluid-tight passage 932 which is connected to a vacuum system incorporating a helium mass spectrometer leak detector 934.

The cover 924 is bolted onto the lower part of the press, which is operably connected to the lower pin 928.

The press is then operated to apply an axial force to the pins 918 and 920 in the direction of the arrows in Figure 15 to compress the powder 911 between the upper and lower pins.

The pressure applied to the pins is then released, and gas supplied through inlet 928 into the chamber 926 surrounding the upper open end of the tube 910. The gas flows into the tube between the pin 920 and the tube walls, through the powder 911, and into the lower chamber 914, passing between the pin 918 and the walls of the tube 910 to leave the tube. The gas then enters the leak detector 934. In this way, the leak rate of the tube 910 after an initial compaction of the powder is determined.

The leak rate is compared to a selected leak to be achieved. If the pressure leak rate is lower than the leak rate to be achieved, the valve 929 is closed stopping the flow of gas into the upper part of the chamber, and pressure applied to the pins 920 and 918 once more to provide further compaction of the powder. The leak rate may then be checked once more by releasing the pressure on the pins, to allow gas to be supplied between the pins and the walls of the tube from the gas supply 930 to the leak detector 934. These steps may be repeated until the leak rate to be achieved is obtained.

If the powder is compressed to too great an extent, such that the leak rate of the tube is too low, the cover 924 and plunger 922 may be removed, and a drill used to abrade the top of the powder. Helium may be applied through the tube as this is carried out to allow the leak rate to be monitored as it increases once more.

When a desired leak rate has been achieved, the tube 910 may be removed from the press, and sealed in a polythene bag. The leak may then be certified with a given leak rate, and may be subjected to further processing, e.g. sintering in a vacuum furnace to fix the leak rate, or welding into a housing as desired.

Although the invention has been described above with reference to the test gas being helium, it will be appreciated that the present invention allows a wide range of different gases to be used. This is because, as the predetermined leak rate of the reference gas leak is achieved by compacting the powder within it, even for low leak rates, the input gas does not need to traverse a particularly long path to reach the outlet of the device. Reference gas leaks in accordance with the invention may therefore be used with heavier test gases, which may be not move so easily through the powder as lighter helium. For example, the reference gas leak may be used with refrigerant gases commonly used in coolant systems of refrigeration units or air conditioning units, halons, freons and other relatively inert gases, as well as lighter gases, such as hydrogen and argon. The test gas may be a pure substance containing only one gas, or may comprise a mixture of different gases. For example, the test gas may be mixture of helium and nitrogen. However, as the present invention may provide a reference gas leak having a very low leak rate, it has been found that it may be used with 100% pure test gas. This is the advantage that the gas may be supplied more easily from the bulk supplies of pure gases often available on site in industrial facilities, rather than needing to obtain a specific diluted test gas mixture including other components to increase the input flow rate and help to cause the test gas to move through the system

As the powder is compacted and then sintered into position to fix it in accordance with the invention, the leak rate of the reference gas leak may be maintained, even under relatively harsh conditions, e.g. of temperature or pressure differentials across the ends of the device in use. This is because the powder will not tend to shift or lose its initial compaction in use.

Reference gas leaks may be produced in accordance with the invention having leak rates in the range of from 1 x 10⁻¹⁰ millibar.litre/second to 1000 mbar.1tr./sec for helium, or from 5 x 10⁻⁶ to 5 x 10⁻⁴ for refrigerants (gas R134A). By way of example, a reference gas leak suitable for use in calibrating a helium mass spectrometer should be able to provide a minimum leak rate in the range of 1 x 10⁻¹⁰ to 1 x 10⁻⁷ millbars.litres/second for Helium gas. Reference gas leaks for use in calibrating gas leaks detectors to test vacuum chambers and valves for leaks should be able to provide a leak rate in the order of 1 x 10⁻⁵ millibar.litre/second (for Helium). Similar minimum leak rates are suitable for use in calibrating leak test equipment used in automotive, domestic radiator and fluid system production lines, and for testing vacuum systems in "over pressure" mode. The reference gas leak may be provided *in situ* on the production line for checking the sensitivity of equipment on the line.

Larger leak rates e.g. of above 1 x 10⁻² mbar.ltr./sec may be appropriate for conductance or filter applications.

## Claims (Claims for the following Contracting State(s): UK)

1. A method of manufacturing a reference gas leak (1):
the method comprising the steps of providing an open ended tube (22), and inserting a powder (30) into the tube;
said powder comprising particles having a diameter in the range of from 10 to 500 µm;
**characterized in that** the method comprises the step of compacting the powder (30) in the tube (22), to provide the reference gas leak (1), wherein the step of compacting the powder in the tube (22) comprises compressing the powder (30) axially between the ends of the tube.

2. The method of claim 1 wherein the step of compacting the powder (30) in the tube comprises compacting the powder such that a gas entering the tube at one end leaks from the other end of the tube at a selected rate after passing through the compacted powder.

3. The method of claim 1 or claim 2 further comprising supplying a gas through one end of the tube and determining the rate at which the gas leaks from the other end of the tube after the powder has been compacted in the tube (22).

4. The method of any preceding claim wherein the step of compacting the powder (30) comprises inserting a first plug (20) in one end of the tube and a second plug (32) in the other end of the tube, and moving at least one of the plugs axially towards the other plug within the tube to compress the powder between the first and second plugs.

5. The method of claim 4 wherein each of the plugs comprises a bore (24, 38), and the method further comprises the step of supplying gas (40) to the interior of the tube through the bore (24) of the plug (20) inserted in one end of the tube, and monitoring the rate at which the gas leaks out of the tube (22) through the bore (38) in the plug (32) inserted in its other end as the powder is compacted in the tube.

6. The method of any preceding claim wherein the step of compacting the powder comprises applying a pressure of at least 20 Kg/mm² to the powder.

7. The method of any preceding claim further comprising sintering the powder in the tube after compaction of the powder.

8. The method of any preceding claim wherein the step of sintering the powder in the tube comprises heating the tube containing the compacted powder to a temperature in a range of from 900 to 1100°C.

9. The method of any preceding claim wherein the sintering step is carried out in a vacuum.

10. A reference gas leak obtained in accordance with the method of any preceding claim.

11. A reference gas leak (1) comprising a tube (3) having an inlet (5) and an outlet (7), **characterized in that** the reference gas leak comprises an axially compacted powder (9) fixed between the inlet and the outlet, whereby a gas supplied to the tube through the inlet passes through the fixed, axially compacted powder to leak from the outlet at a given rate, and wherein the length of the tube occupied by the compacted powder is less than 10mm.

12. The reference gas leak of claim 11 wherein said reference gas leak has a leak rate in the range of from 1 x 10⁻¹⁰ millibar.litre/second to 1000 millibar.litre/second with respect to Helium.

13. The reference gas leak of claim 11 or 12 wherein the compacted powder is a sintered compacted powder.

14. The reference gas leak of claim 11, 12 or 13 further comprising a pressurized gas supply (204) connected to the inlet of the tube whereby the gas supply is operable to supply the gas at a predetermined pressure to the inlet of the reference gas leak such that the gas leaks from the outlet of the tube at a known rate.

15. The method or reference gas leak of any preceding claim wherein the powder is a stainless steel powder.

16. The method or reference gas leak of any preceding claim wherein the tube is a stainless steel tube.

17. The method or reference gas leak of any preceding claim wherein the compacted powder extends no more than 5 mm along the length of the tube.

18. The method or reference gas leak of any preceding claim wherein the compacted powder occupies no more than 50% of the length of the tube.

19. The method or reference gas leak of any preceding claim wherein the tube is straight.

20. The method or reference gas leak of any preceding claim wherein the tube is a cylindrical tube.

21. A method for calibrating a gas leak detector using a reference gas leak (1), the method comprising supplying a gas at a predetermined pressure through an inlet of the reference gas leak, connecting an outlet of the reference gas leak to a gas leak detector, and comparing the gas leak rate indicated by the detector to the known leak rate of the reference gas leak for the gas supplied at the predetermined pressure,
**characterized in that** the reference gas leak comprises a tube having an inlet (5), an outlet (7) and an axially compacted powder (9) fixed therebetween, whereby a given gas supplied to the tube through the inlet at the predetermined pressure passes through the fixed, axially compacted powder to leak from the outlet at the known rate.

22. The method of claim 21 comprising supplying the same gas at a plurality of different predetermined pressures to the reference gas leak, and comparing the leak rate indicated by the detector at each of the plurality of different gas pressures with the known selected leak rates of the reference gas leak for the gas supplied under the different respective pressures.

## Claims (Claims for the following Contracting State(s): AT, BE, BG, CH, CY, CZ, DE, DK, EE, ES, FI, FR, GB, GR, HU, IE, IT, LI, LU, MC, NL, PL, RO, SE, SI, SK, TR)

1. A method of manufacturing a reference gas leak (1):
the method comprising the steps of providing an open ended tube (22), and inserting a powder (30) into the tube;
**characterized in that** the method comprises the step of compacting the powder (30) in the tube (22), to provide the reference gas leak (1), wherein the step of compacting the powder in the tube (22) comprises compressing the powder (30) axially between the ends of the tube.

2. The method of claim 1 wherein the step of compacting the powder (30) in the tube comprises compacting the powder such that a gas entering the tube at one end leaks from the other end of the tube at a selected rate after passing through the compacted powder.

3. The method of claim 1 or claim 2 further comprising supplying a gas through one end of the tube and determining the rate at which the gas leaks from the other end of the tube after the powder has been compacted in the tube (22).

4. The method of any preceding claim wherein the step of compacting the powder (30) comprises inserting a first plug (20) in one end of the tube and a second plug (32) in the other end of the tube, and moving at least one of the plugs axially towards the other plug within the tube to compress the powder between the first and second plugs.

5. The method of claim 4 wherein each of the plugs comprises a bore (24, 38), and the method further comprises the step of supplying gas (40) to the interior of the tube through the bore (24) of the plug (20) inserted in one end of the tube, and monitoring the rate at which the gas leaks out of the tube (22) through the bore (38) in the plug (32) inserted in its other end as the powder is compacted in the tube.

6. The method of any preceding claim wherein the step of compacting the powder comprises applying a pressure of at least 20 Kg/mm² to the powder.

7. The method of any preceding claim further comprising sintering the powder in the tube after compaction of the powder.

8. The method of any preceding claim wherein the step of sintering the powder in the tube comprises heating the tube containing the compacted powder to a temperature in a range of from 900 to 1100°C.

9. The method of any preceding claim wherein the sintering step is carried out in a vacuum.

10. A reference gas leak obtained in accordance with the method of any preceding claim.

11. A reference gas leak (1) comprising a tube (3) having an inlet (5) and an outlet (7), **characterized in that** the reference gas leak comprises an axially compacted powder (9) fixed between the inlet and the outlet, whereby a gas supplied to the tube through the inlet passes through the fixed, axially compacted powder to leak from the outlet at a given rate.

12. The reference gas leak of claim 11 wherein the compacted powder is a sintered compacted powder.

13. The reference gas leak of claim 11 or claim 12 further comprising a pressurized gas supply (204) connected to the inlet of the tube whereby the gas supply is operable to supply the gas at a predetermined pressure to the inlet of the reference gas leak such that the gas leaks from the outlet of the tube at a known rate.

14. The method or reference gas leak of any preceding claim wherein the powder is a stainless steel powder.

15. The method or reference gas leak of any preceding claim wherein the tube is a stainless steel tube.

16. The method or reference gas leak of any preceding claim wherein the compacted powder extends no more than 10 mm along the length of the tube.

17. The method or reference gas leak of any preceding claim wherein the compacted powder occupies no more than 50% of the length of the tube.

18. The method or reference gas leak of any preceding claim wherein the tube is straight.

19. The method or reference gas leak of any preceding claim wherein the tube is a cylindrical tube.

20. A method for calibrating a gas leak detector using a reference gas leak (1), the method comprising supplying a gas at a predetermined pressure through an inlet of the reference gas leak, connecting an outlet of the reference gas leak to a gas leak detector, and comparing the gas leak rate indicated by the detector to the known leak rate of the reference gas leak for the gas supplied at the predetermined pressure,
**characterized in that** the reference gas leak comprises a tube having an inlet (5), an outlet (7) and an axially compacted powder (9) fixed therebetween, whereby a given gas supplied to the tube through the inlet at the predetermined pressure passes through the fixed, axially compacted powder to leak from the outlet at the known rate.

21. The method of claim 20 comprising supplying the same gas at a plurality of different predetermined pressures to the reference gas leak, and comparing the leak rate indicated by the detector at each of the plurality of different gas pressures with the known selected leak rates of the reference gas leak for the gas supplied under the different respective pressures.

## Patentansprüche (Patentansprüche für folgende(n) Vertragsstaat(en): UK)

1. Verfahren zum Herstellen eines Referenzgaslecks (1);
wobei das verfahren die Schritte des Vorsehens eines Rohrs (22) mit offenen Enden und des Eingebens eines Pulvers (30) in das Rohr umfasst;
wobei das Pulver Partikel mit einem Durchmesser im Bereich von 10 bis 500 µm enthält;
**dadurch gekennzeichnet, dass** das verfahren den Schritt des Verdichtens des Pulvers (30) in dem Rohr (22) umfasst, um das Referenzgasleck (1) zu schaffen, wobei der Schritt des Verdichtens des Pulvers in dem Rohr (22) das axiale Zusammendrücken des Pulvers (30) zwischen den Enden des Rohrs umfasst.

2. verfahren nach Anspruch 1, wobei der Schritt des Verdichtens des Pulvers (30) in dem Rohr das Verdichten des Pulvers in der Weise, dass ein in das Rohr an einem Ende eintretendes Gas von dem anderen Ende des Rohrs mit einer ausgewählten Rate entweicht, nachdem es sich durch das verdichtete Pulver bewegt hat, umfasst.

3. Verfahren nach Anspruch 1 oder Anspruch 2, das ferner das Zuführen eines Gases durch ein Ende des Rohrs und das Bestimmen der Rate, mit der das Gas aus dem anderen Ende des Rohrs entweicht, nachdem das Pulver in dem Rohr (22) verdichtet worden ist, umfasst.

4. Verfahren nach einem vorhergehenden Anspruch, wobei der Schritt des Verdichtens des Pulvers (30) das Einsetzen eines ersten Stopfens (20) in ein Ende des Rohrs und eines zweiten Stopfens (32) in das andere Ende des Rohrs sowie das Bewegen wenigstens eines der Stopfen axial in Richtung zu dem anderen Stopfen in dem Rohr, um das Pulver zwischen dem ersten und dem zweiten Stopfen zusammenzudrücken, umfasst.

5. Verfahren nach Anspruch 4, wobei jeder der Stopfen eine Bohrung (24, 38) aufweist und wobei das Verfahren ferner den Schritt des zuführens von Gas (40) in den Innenraum des Rohrs durch die Bohrung (24) des in ein Ende des Rohrs eingesetzten Stopfens (20) und das Überwachen der Rate, mit der das Gas aus dem Rohr (22) durch die Bohrung (38) in dem in das andere Ende eingesetzten Stopfen (32) entweicht, wenn das Pulver in dem Rohr verdichtet wird, umfasst.

6. Verfahren nach einem vorhergehenden Anspruch, wobei der Schritt des Verdichtens des Pulvers das Ausüben eines Drucks von wenigstens 20 kg/mm² auf das Pulver umfasst.

7. Verfahren nach einem vorhergehenden Anspruch, das ferner das Sintern des Pulvers in dem Rohr nach dem Verdichten des Pulvers umfasst.

8. verfahren nach einem vorhergehenden Anspruch, wobei der Schritt des Sinterns des Pulvers in dem Rohr das Erhitzen des das verdichtete Pulver enthaltenden Rohrs auf eine Temperatur im Bereich von 900 bis 1100 °C umfasst.

9. Verfahren nach einem vorhergehenden Anspruch, wobei der Sinterungsschritt in einem Vakuum ausgeführt wird.

10. Referenzgasleck, das gemäß dem Verfahren nach einem vorhergehenden Anspruch erhalten wird.

11. Referenzgasleck (1), das ein Rohr (3) mit einem Einlass (5) und einem Auslass (7) aufweist, **dadurch gekennzeichnet, dass** das Referenzgasleck ein axial verdichtetes Pulver (9) enthält, das zwischen dem Einlass und dem Auslass fixiert ist, wobei sich ein Gas, das dem Rohr durch den Einlass zugeführt wird, durch das fixierte axial verdichtete Pulver bewegt, um aus dem Auslass mit einer gegebenen Rate zu entweichen, und wobei die Länge des Rohrs, die von dem verdichteten Pulver eingenommen wird, kleiner als 10 mm ist.

12. Referenzgasleck nach Anspruch 11, wobei das Referenzgasleck eine Leckrate im Bereich von 1 x 10⁻¹⁰ Millibar · Liter/Sekunde bis 1000 Millibar · Liter/Sekunde in Bezug auf Helium hat.

13. Referenzgasleck nach Anspruch 11 oder 12, wobei das verdichtete Pulver ein gesintertes verdichtetes Pulver ist.

14. Referenzgasleck nach Anspruch 11, 12 oder 13, das ferner eine Druckgasversorgung (204) enthält, die mit dem Einlass des Rohrs verbunden ist, wobei die Gasversorgung betreibbar ist, um das Gas mit einem vorgegebenen Druck dem Einlass des Referenzgaslecks zuzuführen, derart, dass das Gas aus dem Auslass des Rohrs mit einer bekannten Rate entweicht.

15. Verfahren oder Referenzgasleck nach einem vorhergehenden Anspruch, wobei das Pulver ein Edelstahlpulver ist.

16. Verfahren oder Referenzgasleck nach einem vorhergehenden Anspruch, wobei das Rohr ein Edelstahlrohr ist.

17. verfahren oder Referenzgasleck nach einem vorhergehenden Anspruch, wobei sich das verdichtete Pulver in Längsrichtung des Rohrs über nicht mehr als 5 mm erstreckt.

18. Verfahren oder Referenzgasleck nach einem vorhergehenden Anspruch, wobei das verdichtete Pulver nicht mehr als 50 % der Länge des Rohrs einnimmt.

19. Verfahren oder Referenzgasleck nach einem vorhergehenden Anspruch, wobei das Rohr geradlinig ist.

20. Verfahren oder Referenzgasleck nach einem vorhergehenden Anspruch, wobei das Rohr ein zylindrisches Rohr ist.

21. Verfahren zum Kalibrieren eines Gasleckdetektors unter Verwendung eines Referenzgaslecks (1), wobei das Verfahren das Zuführen eines Gases mit einem vorgegebenen Druck durch einen Einlass des Referenzgaslecks, das Verbinden eines Auslasses des Referenzgaslecks mit einem Gasleckdetektor und das Vergleichen der durch den Detektor angegebenen Gasleckrate mit der bekannten Leckrate des Referenzgaslecks für das mit dem vorgegebenen Druck zugeführte Gas umfasst,
**dadurch gekennzeichnet, dass** das Referenzgasleck ein Rohr mit einem Einlass (5), einem Auslass (7) und einem axial verdichteten Pulver (9), das dazwischen fixiert ist, enthält, wobei sich ein gegebenes Gas, das dem Rohr durch den Einlass mit dem vorgegebenen Druck zugeführt wird, durch das fixierte, axial verdichtete Pulver bewegt, um aus dem Auslass mit der bekannten Rate zu entweichen.

22. verfahren nach Anspruch 21, das das Zuführen desselben Gases mit mehreren verschiedenen vorgegebenen Drücken zu dem Referenzgasleck und das vergleichen der Leckrate, die durch den Detektor bei jedem der mehreren verschiedenen Gasdrücke angegeben wird, mit den bekannten ausgewählten Leckraten des Referenzgaslecks für das mit verschiedenen jeweiligen Drücken zugeführte Gas umfasst.

## Patentansprüche (Patentansprüche für folgende(n) Vertragsstaat(en): AT, BE, BG, CH, CY, CZ, DE, DK, EE, ES, FI, FR, GB, GR, HU, IE, IT, LI, LU, MC, NL, PL, RO, SE, SI, SK, TR)

1. Verfahren zum Herstellen eines Referenzgaslecks (1);
wobei das Verfahren die Schritte des Vorsehens eines Rohrs (22) mit offenen Enden und des Eingebens eines Pulvers (30) in das Rohr umfasst;
**dadurch gekennzeichnet, dass** das Verfahren den Schritt des Verdichtens des Pulvers (30) in dem Rohr (22) umfasst, um das Referenzgasleck (1) zu schaffen, wobei der Schritt des Verdichtens des Pulvers in dem Rohr (22) das axiale Zusammendrücken des Pulvers (30) zwischen den Enden des Rohrs umfasst.

2. Verfahren nach Anspruch 1, wobei der Schritt des verdichtens des Pulvers (30) in dem Rohr das Verdichten des Pulvers in der Weise, dass ein in das Rohr an einem Ende eintretendes Gas von dem anderen Ende des Rohrs mit einer ausgewählten Rate entweicht, nachdem es sich durch das verdichtete Pulver bewegt hat, umfasst.

3. Verfahren nach Anspruch 1 oder Anspruch 2, das ferner das Zuführen eines Gases durch ein Ende des Rohrs und das Bestimmen der Rate, mit der das Gas aus dem anderen Ende des Rohrs entweicht, nachdem das Pulver in dem Rohr (22) verdichtet worden ist, umfasst.

4. Verfahren nach einem vorhergehenden Anspruch, wobei der Schritt des Verdichtens des Pulvers (30) das Einsetzen eines ersten Stopfens (20) in ein Ende des Rohrs und eines zweiten Stopfens (32) in das andere Ende des Rohrs sowie das Bewegen wenigstens eines der Stopfen axial in Richtung zu dem anderen Stopfen in dem Rohr, um das Pulver zwischen dem ersten und dem zweiten Stopfen zusammenzudrücken, umfasst.

5. Verfahren nach Anspruch 4, wobei jeder der Stopfen eine Bohrung (24, 38) aufweist und wobei das verfahren ferner den Schritt des Zuführens von Gas (40) in den Innenraum des Rohrs durch die Bohrung (24) des in ein Ende des Rohrs eingesetzten Stopfens (20) und das Überwachen der Rate, mit der das Gas aus dem Rohr (22) durch die Bohrung (38) in dem in das andere Ende eingesetzten Stopfen (32) entweicht, wenn das Pulver in dem Rohr verdichtet wird, umfasst.

6. Verfahren nach einem vorhergehenden Anspruch, wobei der Schritt des Verdichtens des Pulvers das Ausüben eines Drucks von wenigstens 20 kg/mm² auf das Pulver umfasst.

7. Verfahren nach einem vorhergehenden Anspruch, das ferner das Sintern des Pulvers in dem Rohr nach dem Verdichten des Pulvers umfasst.

8. Verfahren nach einem vorhergehenden Anspruch, wobei der Schritt des Sinterns des Pulvers in dem Rohr das Erhitzen des das verdichtete Pulver enthaltenden Rohrs auf eine Temperatur im Bereich von 900 bis 1100 °C umfasst.

9. Verfahren nach einem vorhergehenden Anspruch, wobei der Sinterungsschritt in einem Vakuum ausgeführt wird.

10. Referenzgasleck, das gemäß dem Verfahren nach einem vorhergehenden Anspruch erhalten wird.

11. Referenzgasleck (1), das ein Rohr (3) mit einem Einlass (5) und einem Auslass (7) aufweist, **dadurch gekennzeichnet, dass** das Referenzgasleck ein axial verdichtetes Pulver (9) enthält, das zwischen dem Einlass und dem Auslass fixiert ist, wobei sich ein Gas, das dem Rohr durch den Einlass zugeführt wird, durch das fixierte axial verdichtete Pulver bewegt, um aus dem Auslass mit einer gegebenen Rate zu entweichen.

12. Referenzgasleck nach Anspruch 11, wobei das verdichtete Pulver ein gesintertes verdichtetes Pulver ist.

13. Referenzgasleck nach Anspruch 11 oder Anspruch 12, das ferner eine Druckgasversorgung (204) enthält, die mit dem Einlass des Rohrs verbunden ist, wobei die Gasversorgung betreibbar ist, um das Gas mit einem vorgegebenen Druck dem Einlass des Referenzgaslecks zuzuführen, derart, dass das Gas aus dem Auslass des Rohrs mit einer bekannten Rate entweicht.

14. Verfahren oder Referenzgasleck nach einem vorhergehenden Anspruch, wobei das Pulver ein Edelstahlpulver ist.

15. Verfahren oder Referenzgasleck nach einem vorhergehenden Anspruch, wobei das Rohr ein Edelstahlrohr ist.

16. Verfahren oder Referenzgasleck nach einem vorhergehenden Anspruch, wobei sich das verdichtete Pulver in Längsrichtung des Rohrs über nicht mehr als 10 mm erstreckt.

17. Verfahren oder Referenzgasleck nach einem vorhergehenden Anspruch, wobei das verdichtete Pulver nicht mehr als 50 % der Länge des Rohrs einnimmt.

18. Verfahren oder Referenzgasleck nach einem vorhergehenden Anspruch, wobei das Rohr geradlinig ist.

19. Verfahren oder Referenzgasleck nach einem vorhergehenden Anspruch, wobei das Rohr ein zylindrisches Rohr ist.

20. Verfahren zum Kalibrieren eines Gasleckdetektors unter Verwendung eines Referenzgaslecks (1), wobei das Verfahren das Zuführen eines Gases mit einem vorgegebenen Druck durch einen Einlass des Referenzgaslecks, das Verbinden eines Auslasses des Referenzgaslecks mit einem Gasleckdetektor und das Vergleichen der durch den Detektor angegebenen Gasleckrate mit der bekannten Leckrate des Referenzgaslecks für das mit dem vorgegebenen Druck zugeführte Gas umfasst,
**dadurch gekennzeichnet, dass** das Referenzgasleck ein Rohr mit einem Einlass (5), einem Auslass (7) und einem axial verdichteten Pulver (9), das dazwischen fixiert ist, enthält, wobei sich ein gegebenes Gas, das dem Rohr durch den Einlass mit dem vorgegebenen Druck zugeführt wird, durch das fixierte, axial verdichtete Pulver bewegt, um aus dem Auslass mit der bekannten Rate zu entweichen.

21. Verfahren nach Anspruch 20, das das Zuführen desselben Gases mit mehreren verschiedenen vorgegebenen Drücken zu dem Referenzgasleck und das Vergleichen der Leckrate, die durch den Detektor bei jedem der mehreren verschiedenen Gasdrücke angegeben wird, mit den bekannten ausgewählten Leckraten des Referenzgaslecks für das mit verschiedenen jeweiligen Drücken zugeführte Gas umfasst.

## Revendications (Revendications pour l'(les) Etat(s) contractant(s) suivant(s): UK)

1. Procédé pour produire une fuite de gaz de référence (1) :
le procédé comportant les étapes consistant à fournir un tube à extrémités ouvertes (22), et introduire une poudre (30) dans le tube ;
ladite poudre comportant des particules ayant un diamètre dans la plage de 10 à 500 µm ;
**caractérisé en ce que** le procédé comporte l'étape consistant à compacter la poudre (30) dans le tube (22),
pour créer la fuite de gaz de référence (1), dans lequel l'étape de compactage de la poudre dans le tube (22) comporte l'étape consistant à comprimer axialement la poudre (30) entre les extrémités du tube.

2. Procédé selon la revendication 1, dans lequel l'étape de compactage de la poudre (30) dans le tube comporte l'étape consistant à compacter la poudre de telle sorte qu'un gaz pénétrant dans le tube à une extrémité s'échappe par l'autre extrémité du tube à un débit sélectionné après être passé à travers la poudre compactée.

3. Procédé selon la revendication 1 ou la revendication 2, comportant en outre les étapes consistant à acheminer un gaz à travers une extrémité du tube et déterminer le débit auquel le gaz s'échappe par l'autre extrémité du tube après que la poudre ait été compactée dans le tube (22).

4. Procédé selon l'une quelconque des revendications précédentes, dans lequel l'étape de compactage de la poudre (30) comporte les étapes consistant à introduire un premier bouchon (20) dans une extrémité du tube et un second bouchon (32) dans l'autre extrémité du tube, et déplacer axialement au moins un des bouchons vers l'autre bouchon à l'intérieur du tube pour comprimer la poudre entre les premier et second bouchons.

5. Procédé selon la revendication 4, dans lequel chacun des bouchons comporte un alésage (24, 38), et le procédé comporte en outre l'étape consistant à acheminer du gaz (40) jusqu'à l'intérieur du tube à travers l'alésage (24) du bouchon (20) inséré dans une extrémité du tube, et surveiller le débit auquel le gaz s'échappe à l'extérieur du tube (22) à travers l'alésage (38) dans le bouchon (32) introduit dans son autre extrémité lorsque la poudre est compactée dans le tube.

6. Procédé selon l'une quelconque des revendications précédentes, dans lequel l'étape de compactage de la poudre comporte l'étape consistant à appliquer une pression d'au moins 20 kg/mm² sur la poudre.

7. Procédé selon l'une quelconque des revendications précédentes, comportant en outre l'étape consistant à fritter la poudre dans le tube après compactage de la poudre.

8. Procédé selon l'une quelconque des revendications précédentes, dans lequel l'étape de frittage de la poudre dans le tube comporte l'étape consistant à chauffer le tube contenant la poudre compactée jusqu'à une température dans une plage de 900 à 1 100 °C.

9. Procédé selon l'une quelconque des revendications précédentes, dans lequel l'étape de frittage est exécutée sous vide.

10. Fuite de gaz de référence obtenue selon le procédé de l'une quelconque des revendications précédentes.

11. Fuite de gaz de référence (1) comportant un tube (3) ayant une entrée (5) et une sortie (7), **caractérisée en ce que** la fuite de gaz de référence comporte une poudre compactée axialement (9) fixe entre l'entrée et la sortie, de sorte qu'un gaz acheminé jusqu'au tube à travers l'entrée passe à travers la poudre fixe, compactée axialement, pour s'échapper par la sortie à un débit donné, et dans laquelle la longueur du tube occupée par la poudre compactée n'est pas inférieure à 10 mm.

12. Fuite de gaz de référence selon la revendication 11, dans laquelle ladite fuite de gaz de référence a un débit de fuite dans la plage de 1 x 10⁻¹⁰ millibar.litre/seconde à 1 000 millibar.litre/seconde par rapport à l'hélium.

13. Fuite de gaz de référence selon la revendication 11 ou 12, dans laquelle la poudre compactée est une poudre compactée frittée.

14. Fuite de gaz de référence selon la revendication 11, 12 ou 13, comportant également une alimentation en gaz mis sous pression (204) raccordée à l'entrée du tube de sorte que l'alimentation en gaz est opérationnelle pour acheminer le gaz à une pression prédéterminée jusqu'à l'entrée de la fuite de gaz de référence de telle sorte que le gaz s'échappe par la sortie du tube à un débit connu.

15. Procédé ou fuite de gaz de référence selon l'une quelconque des revendications précédentes, dans lequel la poudre est une poudre d'acier inoxydable.

16. Procédé ou fuite de gaz de référence selon l'une quelconque des revendications précédentes, dans lequel le tube est un tube en acier inoxydable.

17. Procédé ou fuite de gaz de référence selon l'une quelconque des revendications précédentes, dans lequel la poudre compactée ne s'étend pas plus de 5 mm le long de la longueur du tube.

18. Procédé ou fuite de gaz de référence selon l'une quelconque des revendications précédentes, dans lequel la poudre compactée n'occupe pas plus de 50 % de la longueur du tube.

19. Procédé ou fuite de gaz de référence selon l'une quelconque des revendications précédentes, dans lequel le tube est droit.

20. Procédé ou fuite de gaz de référence selon l'une quelconque des revendications précédentes, dans lequel le tube est un tube cylindrique.

21. Procédé pour calibrer un détecteur de fuite de gaz en utilisant une fuite de gaz de référence (1), le procédé comportant les étapes consistant à acheminer un gaz à une pression prédéterminée à travers une entrée de la fuite de gaz de référence, raccorder une sortie de la fuite de gaz de référence à un détecteur de fuite de gaz, et comparer le débit de fuite de gaz indiqué par le détecteur au débit de fuite connu de la fuite de gaz de référence pour le gaz acheminé à la pression prédéterminée,
**caractérisé en ce que** la fuite de gaz de référence comporte un tube ayant une entrée (5), une sortie (7) et une poudre fixe, compactée axialement (9) entre celles-ci, de sorte qu'un gaz donné acheminé dans le tube à travers l'entrée à la pression prédéterminée passe à travers la poudre fixe, compactée axialement, pour s'échapper par la sortie au débit connu.

22. Procédé selon la revendication 21, comportant les étapes consistant à acheminer le même gaz à une pluralité de différentes pressions prédéterminées vers la fuite de gaz de référence, et comparer le débit de fuite indiqué par le détecteur à chaque pression parmi la pluralité de différentes pressions de gaz avec les débits de fuite sélectionnés connus de la fuite de gaz de référence pour le gaz acheminé sous les différentes pressions respectives.

## Revendications (Revendications pour l'(les) Etat(s) contractant(s) suivant(s): AT, BE, BG, CH, CY, CZ, DE, DK, EE, ES, FI, FR, GB, GR, HU, IE, IT, LI, LU, MC, NL, PL, RO, SE, SI, SK, TR)

1. Procédé pour produire une fuite de gaz de référence (1) :
le procédé comportant les étapes consistant à fournir un tube à extrémités ouvertes (22), et introduire une poudre (30) dans le tube ;
**caractérisé en ce que** le procédé comporte l'étape consistant à compacter la poudre (30) dans le tube (22),
pour créer la fuite de gaz de référence (1), dans lequel l'étape de compactage de la poudre dans le tube (22) comporte l'étape consistant à comprimer axialement la poudre (30) entre les extrémités du tube.

2. Procédé selon la revendication 1, dans lequel l'étape de compactage de la poudre (30) dans le tube comporte l'étape consistant à compacter la poudre de telle sorte qu'un gaz pénétrant dans le tube à une extrémité s'échappe par l'autre extrémité du tube à un débit sélectionné après être passé à travers la poudre compactée.

3. Procédé selon la revendication 1 ou la revendication 2, comportant en outre les étapes consistant à acheminer un gaz à travers une extrémité du tube et déterminer le débit auquel le gaz s'échappe par l'autre extrémité du tube après que la poudre ait été compactée dans le tube (22).

4. Procédé selon l'une quelconque des revendications précédentes, dans lequel l'étape de compactage de la poudre (30) comporte les étapes consistant à introduire un premier bouchon (20) dans une extrémité du tube et un second bouchon (32) dans l'autre extrémité du tube, et déplacer axialement au moins un des bouchons vers l'autre bouchon à l'intérieur du tube pour comprimer la poudre entre les premier et second bouchons.

5. Procédé selon la revendication 4, dans lequel chacun des bouchons comporte un alésage (24, 38), et le procédé comporte en outre l'étape consistant à acheminer du gaz (40) jusqu'à l'intérieur du tube à travers l'alésage (24) du bouchon (20) inséré dans une extrémité du tube, et surveiller le débit auquel le gaz s'échappe à l'extérieur du tube (22) à travers l'alésage (38) dans le bouchon (32) introduit dans son autre extrémité lorsque la poudre est compactée dans le tube.

6. Procédé selon l'une quelconque des revendications précédentes, dans lequel l'étape de compactage de la poudre comporte l'étape consistant à appliquer une pression d'au moins 20 kg/mm² sur la poudre.

7. Procédé selon l'une quelconque des revendications précédentes, comportant en outre l'étape consistant à fritter la poudre dans le tube après compactage de la poudre.

8. Procédé selon l'une quelconque des revendications précédentes, dans lequel l'étape de frittage de la poudre dans le tube comporte l'étape consistant à chauffer le tube contenant la poudre compactée jusqu'à une température dans une plage de 900 à 1 100 °C.

9. Procédé selon l'une quelconque des revendications précédentes, dans lequel l'étape de frittage est exécutée sous vide.

10. Fuite de gaz de référence obtenue selon le procédé de l'une quelconque des revendications précédentes.

11. Fuite de gaz de référence (1) comportant un tube (3) ayant une entrée (5) et une sortie (7), **caractérisée en ce que** la fuite de gaz de référence comporte une poudre compactée axialement (9) fixe entre l'entrée et la sortie, de sorte qu'un gaz acheminé jusqu'au tube à travers l'entrée passe à travers la poudre fixe, compactée axialement, pour s'échapper par la sortie à un débit donné.

12. Fuite de gaz de référence selon la revendication 11, dans laquelle la poudre compactée est une poudre compactée frittée.

13. Fuite de gaz de référence selon la revendication 11 ou la revendication 12, comportant également une alimentation en gaz mis sous pression (204) raccordée à l'entrée du tube de sorte que l'alimentation en gaz est opérationnelle pour acheminer le gaz à une pression prédéterminée jusqu'à l'entrée de la fuite de gaz de référence de telle sorte que le gaz s'échappe par la sortie du tube à un débit connu.

14. Procédé ou fuite de gaz de référence selon l'une quelconque des revendications précédentes, dans lequel la poudre est une poudre d'acier inoxydable.

15. Procédé ou fuite de gaz de référence selon l'une quelconque des revendications précédentes, dans lequel le tube est un tube en acier inoxydable.

16. Procédé ou fuite de gaz de référence selon l'une quelconque des revendications précédentes, dans lequel la poudre compactée ne s'étend pas plus de 10 mm le long de la longueur du tube.

17. Procédé ou fuite de gaz de référence selon l'une quelconque des revendications précédentes, dans lequel la poudre compactée n'occupe pas plus de 50 % de la longueur du tube.

18. Procédé ou fuite de gaz de référence selon l'une quelconque des revendications précédentes, dans lequel le tube est droit.

19. Procédé ou fuite de gaz de référence selon l'une quelconque des revendications précédentes, dans lequel le tube est un tube cylindrique.

20. Procédé pour calibrer un détecteur de fuite de gaz en utilisant une fuite de gaz de référence (1), le procédé comportant les étapes consistant à acheminer un gaz à une pression prédéterminée à travers une entrée de la fuite de gaz de référence, raccorder une sortie de la fuite de gaz de référence à un détecteur de fuite de gaz, et comparer le débit de fuite de gaz indiqué par le détecteur au débit de fuite connu de la fuite de gaz de référence pour le gaz acheminé à la pression prédéterminée,
**caractérisé en ce que** la fuite de gaz de référence comporte un tube ayant une entrée (5), une sortie (7) et une poudre fixe, compactée axialement (9) entre celles-ci, de sorte qu'un gaz donné acheminé jusqu'au tube à travers l'entrée à la pression prédéterminée passe à travers la poudre fixe, compactée axialement, pour s'échapper par la sortie au débit connu.

21. Procédé selon la revendication 20, comportant les étapes consistant à acheminer le même gaz à une pluralité de différentes pressions prédéterminées jusqu'à la fuite de gaz de référence, et comparer le débit de fuite indiqué par le détecteur à chaque pression parmi la pluralité de différentes pressions de gaz avec les débits de fuite sélectionnés connus de la fuite de gaz de référence pour le gaz acheminé sous les différentes pressions respectives.
